(19) Europäisches Patentamt / European Patent Office / Office européen des brevets

(11) **EP 4 375 637 A1**

(12) **EUROPEAN PATENT APPLICATION**

(43) Date of publication:
**29.05.2024  Bulletin 2024/22**

(21) Application number: **23200298.0**

(22) Date of filing: **28.09.2023**

(51) International Patent Classification (IPC):
***G01M 17/02*** *(2006.01)*

(52) Cooperative Patent Classification (CPC):
**G01M 17/027**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **25.11.2022   JP 2022188298**

(71) Applicant: **Sumitomo Rubber Industries, Ltd.
Kobe-shi, Hyogo 651-0072 (JP)**

(72) Inventor: **SHIMIZU, Ryosuke
Kobe-shi, 651-0072 (JP)**

(74) Representative: **Manitz Finsterwald
Patent- und Rechtsanwaltspartnerschaft mbB
Martin-Greif-Strasse 1
80336 München (DE)**

(54) **METHOD OF EVALUATING WATER DRAINAGE PERFORMANCE OF TIRE AND TIRE**

(57)    Provided is a method capable of evaluating micro-level water drainage performance of irregularities on the tire surface and a tire with excellent ice grip performance. The method of evaluating the water drainage performance of tires includes shooting a video of a tire rolling on a transparent or translucent plate provided with a water film from below the transparent or translucent plate; processing a snapshot image of the shot video into regions of an actual grounded part, a water film part, and a void space; and calculating a ratio of the actual grounded part and the water film part.

EP 4 375 637 A1

**Description**

TECHNICAL FIELD

The present invention relates to a method of evaluating the water drainage performance of tires and a tire.

BACKGROUND ART

Observation of the grounded state of a rolling tire is usually performed by, for example, rolling a tire on a glass plate and shooting the tire part grounded on the glass plate from below the glass plate using a video camera. However, the micro-level water drainage performance of irregularities on the surface of the tire has not been evaluated (see Patent Literature 1).

CITATION LIST

PATENT LITERATURE

Patent Literature 1: JP H7-128196 A

SUMMARY OF INVENTION

TECHNICAL PROBLEM

The present invention aims to solve the above problem and to provide a method capable of evaluating micro-level water drainage performance of irregularities on the tire surface and a tire with excellent ice grip performance.

SOLUTION TO PROBLEM

The present invention relates to a method of evaluating the water drainage performance of tires, the method including:

shooting a video of a tire rolling on a transparent or translucent plate provided with a water film from below the transparent or translucent plate;
processing a snapshot image of the shot video into regions of an actual grounded part, a water film part, and a void space; and
calculating a ratio of the actual grounded part and the water film part.

ADVANTAGEOUS EFFECTS OF INVENTION

The present invention can provide a method capable of evaluating micro-level water drainage performance of irregularities on the tire surface. The present invention can also provide a tire with excellent ice grip performance.

BRIEF DESCRIPTION OF DRAWINGS

FIG. 1 shows an exemplary schematic view of shooting an image of the grounded state (grounded part) of a tire when the tire is standing still, rolling, or the like in the method of evaluating the water drainage performance of tires according to the present invention.
FIG. 2A shows a stationary image of a grounded part 112 of a tire 111 sufficiently standing still on a transparent or translucent plate 102 provided with a water film 103 in the shooting, and FIG. 2B shows a brightness distribution of the stationary image.
FIG. 3 shows three snapshot images extracted from a video obtained by shooting the changing grounded state of the tire 111 that rolls on the transparent or translucent plate 102 provided with the water film 103 from below the transparent or translucent plate 102.
FIGS. 4A and 4B each schematically show an image in which the region of the actual grounded part determined in the image processing first occupies 1.0 area% or more of the snapshot image.
FIG. 5 shows an example of the tire of the present invention.

FIG. 6 is an enlarged view of a tread 4 and its vicinity in FIG. 5.

DESCRIPTION OF EMBODIMENTS

<Method of evaluating the water drainage performance of tires>

The present invention provides a method of evaluating the water drainage performance of tires, the method including:

shooting a video of a tire rolling on a transparent or translucent plate provided with a water film from below the transparent or translucent plate;
processing a snapshot image of the shot video into regions of an actual grounded part, a water film part, and a void space; and
calculating a ratio of the actual grounded part and the water film part.

When a tire rolls on a water film, regions of the tire where no water film is present between the tire and the road surface in a grounded face greatly contribute to the grip performance. The faster the water film between the tire and the road surface is removed by irregularities on the tire surface, the better the ice grip performance may become. The present invention separates the region of a tire rolling on a water film into an actual grounded part, a water film part, and a void space, whereby the present invention can confirm the presence of a water film between the road surface and a tire part grounded on the road surface. Moreover, the present invention determines the ratio of the actual grounded part and the water film part, whereby the present invention can quantitatively evaluate the speed of removing a water film between the tire and the road surface to allow for actual grounding on the road surface. For the above reasons, the present invention can provide a method capable of evaluating micro-level water drainage performance of irregularities on the tire surface.

The order of the shooting, the image processing, and the calculation in the method of evaluating the water drainage performance of tires is not limited and may be in any order. Yet, the order is preferably from the shooting to the image processing to the calculation.

An example of the method of evaluating the water drainage performance of tires of the present invention is described below, but the present invention is not limited to the method.

The shooting is performed by shooting a video of a tire rolling on a transparent or translucent plate provided with a water film from below the transparent or translucent plate. In "a step of obtaining an actual grounded part" described below, to easily obtain a binarization threshold, it is preferable to obtain a stationary image of the tire standing still on a transparent or translucent plate provided with a water film shot from below the transparent or translucent plate in addition to the video.

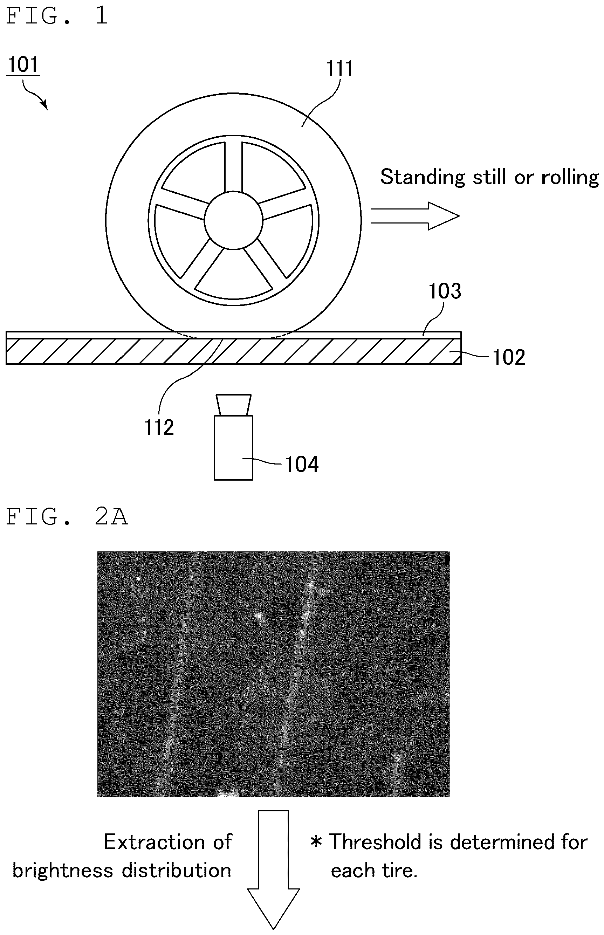

FIG. 1 shows an exemplary schematic view of shooting an image of the grounded state (grounded part) of a tire when the tire is standing still, rolling, or the like in the method of evaluating the water drainage performance of tires according to the present invention.

A tire grounded state-shooting system 101 in FIG. 1 includes a transparent or translucent plate 102 on which a car (not shown) can run, a water film 103 on the transparent or translucent plate 102, and an image-shooting device 104 disposed below the transparent or translucent plate 102.

FIG. 1 shows a schematic view of shooting an image of the grounded state of the tire 111 (tire mounted on a car not shown) that is standing still or rolling on the transparent or translucent plate 102 provided with the water film 103 from below the transparent or translucent plate 102.

The method of evaluating the water drainage performance of tires of the present invention is applicable to any tire. The method is applicable to pneumatic tires and non-pneumatic tires and is applicable to summer tires, winter tires, all-season tires, etc. Examples of the winter tires include studless tires, snow tires, and studded tires. Examples of the tire also include tires for passenger cars, large passenger cars, large SUVs, heavy duty vehicles such as trucks and buses, light tracks, and motorcycles, and racing tires. The size of the tire to which the method can be applied is not limited. The method is applicable to tires of any size.

Of these, the method is suitably applicable to winter tires. In this case, the method can quantitatively evaluate the performance to drain the water of a water film by the irregularities on the tire surface, which is important for winter tires.

The speed of the car is not limited in the method of evaluating the water drainage performance of tires. In view of observation of water drainage by the irregularities on the tire surface, the speed is preferably 0.1 km/h or higher, more preferably 1 km/h or higher, still more preferably 5 km/h or higher, while it is preferably 50 km/h or lower, more preferably 30 km/h or lower, still more preferably 20 km/h or lower.

The load imposed on one tire is not limited in the method of evaluating the water drainage performance of tires. In view of observation of water drainage by the irregularities on the tire surface, the load is preferably 150 kg or more, more preferably 250 kg or more, still more preferably 375 kg or more, while it is preferably 800 kg or less, more preferably 700 kg or less, still more preferably 600 kg or less.

The transparent or translucent plate 102 may be any transparent or translucent plate through which an image of the grounded state of the tire 111 standing still or rolling on the water film 103 can be shot from below the transparent or translucent plate.

Examples of the transparent or translucent plate 102 include transparent or translucent glass plates and transparent or translucent acrylic plates. Examples of the glass plates include tempered glass.

The transparent or translucent plate 102 may be any transparent or translucent plate having a transmittance that allows for the shooting of an image of the grounded state of the tire 111, and the transmittance is not limited. The transparent or translucent plate encompasses any of colorless transparent plates, translucent plates, colored transparent plates, and colored translucent plates.

The transparent or translucent plate 102 has a transmittance of preferably 60 or higher, more preferably 65 or higher. The upper limit of the transmittance is usually, but not limited to, 100 or lower. Here, the spectrophotometric transmittance (L* value) may be used as the transmittance.

The thickness of the transparent or translucent plate 102 may be appropriately determined such that the plate is sufficiently resistant to the rolling of the tire and that an image of the grounded part 112 of the tire 111 can be sufficiently shot by the image-shooting device 104 from below the plate.

In view of the strength and tire image-shooting performance, the upper limit of the thickness is preferably 30 mm or more, more preferably 40 mm or more, still more preferably 50 mm or more, further still more preferably 60 mm or more. The lower limit is preferably 200 mm or less, more preferably 100 mm or less, still more preferably 80 mm or less.

The water film 103 may be made of any material that can form a water-containing film on the transparent or translucent plate 102. To better shoot the water drainage performance, the water film 103 preferably includes a suspension.

Non-limiting examples of the suspension include a white suspension. The white suspension is not limited and may be a mixed solution of a white paint such as a pigment and water or a mixed solution of cow milk and water. The concentration of the white suspension may be appropriately selected taking the image to be obtained into consideration. Examples of the mixed solution of a white pigment and water include those with a white paint concentration of 0.1 to 1.0% by mass. Examples of the mixed solution of cow milk and water include those with a cow milk concentration of 10 to 50% by mass.

When a white suspension is used for the water film 103, the contour of the grounded part 112 is clearly projected due to the black color of the tire 111 and the white color of the white suspension. Moreover, a high ambient light-shielding effect can be achieved, and the lighting for the grounded part 112 surpasses the ambient light. Thus, the image of the grounded part 112 is clearly projected without being darkened.

The thickness of the water film 103 is not limited, and it is 1 to 10 mm, preferably 4 to 6 mm, for example. When the thickness is within the range indicated above, the ambient light-shielding effect, the high contrast effect, and the like tend to be suitably achieved.

The image-shooting device 104 may be any device that can shoot images of the grounded part 112 of the tire 111 mounted on a car that is standing still or running on the transparent or translucent plate 102 provided with the water film 103. Examples of usable devices include various cameras such as still cameras and video cameras.

In view of observation of water drainage by the irregularities on the tire surface, the image-shooting device 104 is desirably a high-speed camera. Examples of the high-speed camera include digital high-speed cameras.

The term "high-speed camera" in the present invention refers to a camera capable of sequentially shooting more than 30 frames per second.

The frame rate (shooting speed) of the high-speed camera is preferably 1000 to 50000 frames per second (fps), more preferably 1500 to 40000 fps, still more preferably 2000 to 30000 fps. The shutter speed of the high-speed camera is not limited, while it is preferably 20.1 $\mu$s or lower.

The luminous intensity is not limited. In view of observation of water drainage by the irregularities on the tire surface, the luminous intensity is preferably 10000 lx or more, more preferably 50000 lx or more, still more preferably 100000 lx or more, while it is preferably 500000 lx or less, more preferably 400000 lx or less, still more preferably 300000 lx or less.

In view of observation of water drainage by the irregularities on the tire surface, the image-shooting device 104 desirably shoots a narrow field of view.

The field of view (part) to be shot is preferably 5.0 cm$^2$ or narrower, more preferably 3.0 cm$^2$ or narrower, still more preferably 2.0 cm$^2$ or narrower, further still more preferably 1.8 cm$^2$ or narrower. The lower limit is not limited. It is desirable to shoot a narrowest possible field of view. For example, the lower limit may be 0.01 cm$^2$ or wider, 0.05 cm$^2$ or wider, or 0.1 cm$^2$ or wider.

The image-shooting device 104 may be controlled or operated by a computer to shoot still images or videos. Examples of usable computers include computers which can control the image-shooting device 104 and also function as a data processing device to process the date shot by the image-shooting device 104 and/or a display device to display the grounded state of the tire 111 based on the processed date having been processed by the data processing device.

The tire grounded state-shooting system 101 may appropriately include a lighting device so that the image-shooting device 104 can shoot stationary images or videos with high contrast.

In the image processing, an image obtained in the shooting is separated into the regions of the actual grounded part, the water film part, and the void space. Though not limited, the image processing preferably includes a "step of obtaining an actual grounded part" in which a threshold to separate the actual grounded part from non-actual grounded parts (combined region of the water film part and the void space, i.e., regions other than the actual grounded part) is determined and a "step of obtaining a void space" in which a threshold to separate the void space from parts other than the void space (combined region of the actual grounded part and the water film part) is determined. In the method of evaluating the water drainage performance of tires, the order of the step of obtaining an actual grounded part and the step of obtaining a void space is not limited. Either one of the steps may be performed first, or the steps may be performed simultaneously.

The term "actual grounded part" in the present invention refers to a region at which the tire is actually in contact with the ground, specifically a region at which no water film is present between the tire and the road surface. The term "water film part" refers to a region at which the tire is not in contact with the ground on the micro level, specifically a region at which a water film is present between the tire and the road surface. The term "void space" refers to a region with no tire image, specifically a region at which the tire has not yet reached or has already passed. The term "non-actual grounded part" refers to a combined region of the "water film part" and the "void space", specifically a region remaining after removing the "actual grounded part" from the whole snapshot image.

The step of obtaining an actual grounded part can be carried out by determining a binarization threshold to separate the actual grounded part from the non-actual grounded parts (combined region of the water film part and the void space) in an image shot in the shooting, for example, a stationary image of the grounded state of the tire 111 on the transparent or translucent plate 102 provided with the water film 103 shot from below the transparent or translucent plate 102. A snapshot image described later is also usable to determine the binarization threshold as well as the stationary image.

In the step of obtaining an actual grounded part, the binarization threshold to separate the actual grounded part from the non-actual grounded parts (combined region of the water film part and the void space) is desirably a value having the highest frequency in a brightness distribution of the stationary image shot in the shooting. When two or more values have the highest frequency, the smallest value is desirably determined as a value having the highest frequency. The lower limit of the brightness is usually desirably 0 or more, and the upper is usually desirably 255 or less.

The stationary image shot in the shooting is desirably an image of a tire standing still on the transparent or translucent plate shot from below the transparent or translucent plate. Moreover, the binarization threshold in the step of obtaining an actual grounded part is desirably determined for each tire.

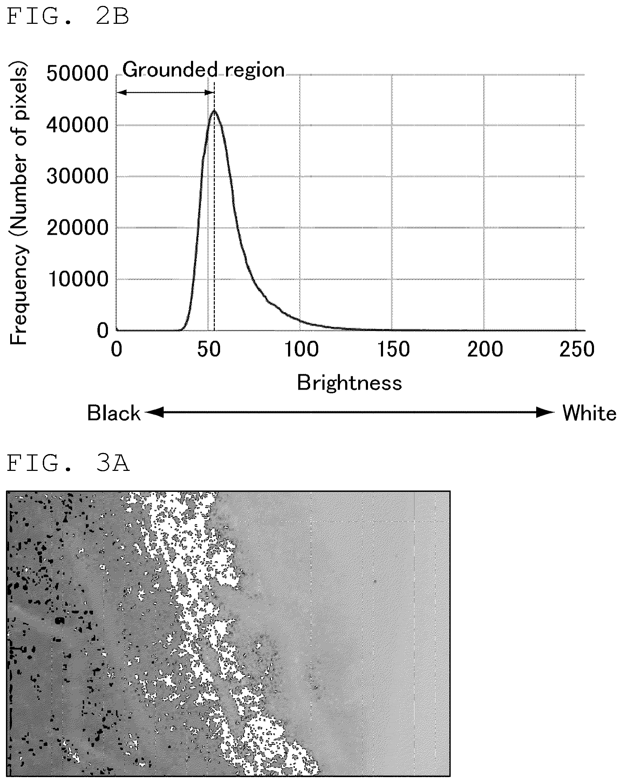

FIG. 2A shows a stationary image of the grounded part 112 of the tire 111 sufficiently standing still on the transparent or translucent plate 102 provided with the water film 103 in the shooting, and FIG. 2B shows a brightness distribution of the image extracted in the image processing.

The stationary image in FIG. 2A is an image obtained by shooting the grounded part 112 of the tire 111 from below the transparent or translucent plate 102 provided with the water film 103 using the image-shooting device 104 when a car with the tire 111 mounted thereon is sufficiently standing still on the transparent or translucent plate 102. FIG. 2B is a brightness distribution extracted from the image in FIG. 2A.

Specifically, for example, a brightness value having the highest frequency (number of pixels) may be determined as the binarization threshold in FIG. 2B. The binarization threshold can separate the actual grounded part from the non-actual grounded parts of the tire. Desirably, the region of the binarization threshold or less is defined as the actual grounded part and the region of values higher than the binarization threshold is defined as the non-actual grounded parts. In the example in FIG. 2, the binarization threshold is 52, and the region of a brightness of 52 or less can be determined as the actual grounded part.

The step of obtaining a void space can be carried out by determining a binarization threshold to separate the void space from the parts other than the void space (combined region of the water film part and the actual grounded part) in each snapshot image of a video shot in the shooting.

The binarization threshold in the step of obtaining a void space is determined by a method that is different from the method used to determine the binarization threshold in the step of obtaining an actual grounded part. In particular, the binarization threshold to separate the void space from the parts other than the void space (combined region of the actual grounded part and the water film part) is desirably determined by discriminant analysis, specifically, binarization in accordance with Otsu's method (see, for example, Nobuyuki Otsu "Automatic Threshold Selection Method Based on Discriminant and Least Squares Criteria", The Transactions of the Institute of Electronics, Information and Communication Engineers D, Vol. J63-D, No.4, pp. 346-356 (1980)).

Here, the term "snapshot image" refers to a stationary image of each frame constituting the shot video. A set of all shot snapshot images makes up the shot video. The term "shot video" in the present invention is a video obtained by shooting a tire from before the tire passes on the transparent or translucent plate until the tire completely passes through the plate. The video does not include any object other than the tire and the water film.

In the step of obtaining a void space, desirably, the binarization threshold to separate the void space from the parts other than the void space (combined region of the actual grounded part and the water film part) is determined for all the snapshot images constituting the video shot in the shooting, and the binarization threshold is used to separate the void space from regions other than the void space.

Usually, the binarization threshold determined in the step of obtaining a void space is larger than the binarization threshold determined in the step of obtaining an actual grounded part. In the step of obtaining a void space, the binarization threshold is determined for every snapshot image. The binarization thresholds of the snapshot images are not the same and are usually different. With regard to the binarization threshold determined in the step of obtaining an actual grounded part, desirably the same binarization threshold is used for all the snapshot images. Specifically, in the example in FIG. 2, the region of a brightness of 52 or less corresponds to the actual grounded part of the tire. The threshold, specifically a brightness of 52 or less, does not vary among the snapshot images.

For example, the step of obtaining a void space can be carried by first shooting a video of the rolling tire 111 from when the tire 111 enters the shooting position until the tire 111 exits the shooting position, and then determining the binarization thresholds of all the snapshot images constituting the video in accordance with Otsu's method or the like.

The rolling mode of the tire 111 is not limited, including rolling straightforward from entering to exiting from the shooting position. Rolling straightforward is desirable.

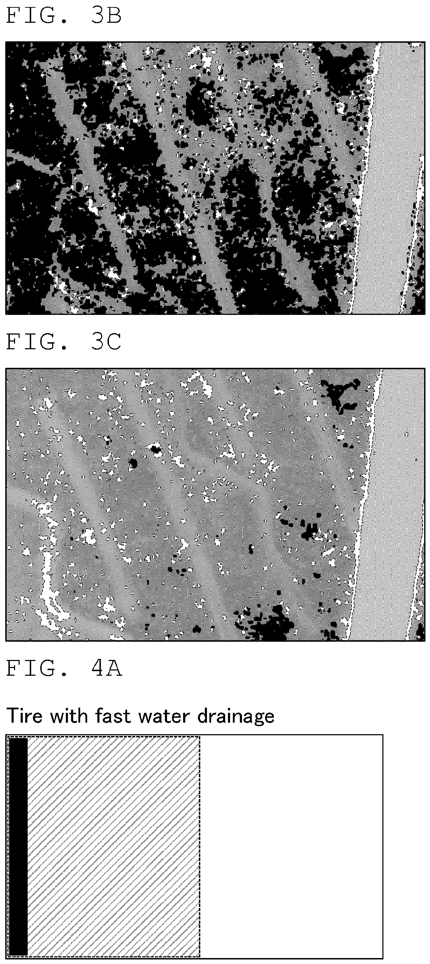

FIG. 3 shows three snapshot images extracted from a video obtained by shooting the changing grounded state of the tire 111 that rolls on the transparent or translucent plate 102 provided with the water film 103 from below the transparent or translucent plate 102. A region of the binarization threshold (52 in FIG. 2) determined in the step of obtaining an actual grounded part is colored black, while a region of the binarization threshold determined in the step of obtaining a void space is colored white.

FIG. 3A is an exemplary snapshot image of the grounded part 112 of the rolling tire 111 which is entering the shooting position in an initial stage of the shooting. FIG. 3B is an exemplary snapshot image of the grounded part 112 at the shooting position in a middle stage of the shooting. FIG. 3 is an exemplary snapshot image of the grounded part 112 at the shooting position in a final stage of the shooting.

The calculation can be carried out by determining a ratio of the actual grounded part and the water film part in each snapshot image of the shot image. It is desirable to determine the area percentage of a combined region of the actual grounded part and the water film part in a whole 100% area (area%) of the snapshot image. It is particularly desirable to determine the area percentage of a combined region of the actual grounded part and the water film part in a whole 100% area (area%) of a first snapshot image in which the region of the actual ground part first occupies a predetermined percentage or more of the snapshot image among the snapshot images constituting the video. Here, the method to calculate the ratio of the actual grounded part and the water film part is not limited to the method described above. For example, it may be a method to determine an area percentage of the region of the actual grounded part in the area of a combined region of the actual grounded part and the water film part.

In the calculation, first, the first snapshot image in which the region of the actual ground part first occupies a predetermined percentage or more of the snapshot image among all the snapshot images is extracted. For example, a snapshot image to be extracted in the example in FIG. 2 is a first snapshot image in which a region of values not greater than a threshold of 52 or less first occupies a predetermined percentage or more.

The "predetermined percentage" may be appropriately selected. In particular, the predetermined percentage or more is more desirably 1.0% (area%) or more. It is the percentage of the region of the actual grounded part in 100% (area%) of a snapshot image consisting of the regions of the actual grounded part, the water film part, and the void space.

The term "first snapshot image" in the present invention refers to a first snapshot image in which the region of the actual grounded part first occupies a predetermined percentage or more of the image among all the snapshot images. Namely, the region of the actual grounded part is less than the predetermined percentage in every one of the snapshot images starting from a snapshot image at the beginning of the video to a snapshot image shot just before the first snapshot image. For example, when the definition of the first snapshot image is a snapshot image in which the region of the actual grounded part first occupies 1.0% or more in 100% (area%) of the snapshot image among all the snapshot images, the first snapshot image is a snapshot image 3 among a snapshot image 1 with the region of the actual grounded part occupying 0.1%, a snapshot image 2 with the region occupying 0.4%, a snapshot image 3 with the region occupying 1.1%, and a snapshot image 4 with the region occupying 1.5% which are sequentially shot in the said order.

For example, when the threshold determined in the step of obtaining a void space is 60, the percentage (%) occupied by the region of the threshold of 60 or less in 100% (area%) of the first snapshot image, specifically the area percentage (area%) occupied by a combined region of the actual grounded part and the water film part in 100 area% of the first snapshot image, can be determined.

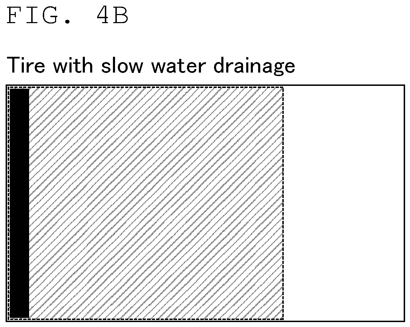

FIGS. 4A and 4B show schematic views of different tires. The image of each tire is obtained by carrying out the shooting, the image processing, and extraction of the first snapshot image in the calculation, and then showing the regions of the actual grounded part, the void space, the water film part, and a combined region of the actual grounded part and the water film part in the first snapshot image respectively as the black region, the white region, the shaded region, and the region enclosed by the dashed line.

Specifically, FIGS. 4A and 4B each schematically show an image in which the region (occupying percentage) of the actual grounded part corresponding to a region of values not greater than a binarization threshold of 52 determined in the step of obtaining an actual grounded part first occupies 1.0 area% or more of the snapshot image. The black region schematically shows a region of values not greater than a threshold of 52 determined in the step of obtaining an actual grounded part in 100 area% of the first snapshot image. The white region schematically shows a region of values more than a threshold of 60 determined in the step of obtaining a void space in 100 area% of the first snapshot image. The region enclosed by the dashed line schematically shows a region of values not greater than a threshold of 60 in the step of obtaining a void space in 100 area% of the first snapshot image. The shaded region schematically shows a region that satisfies a threshold of 60 or less determined in the step of obtaining a void space in 100 area% of the first snapshot image and that is a region of values greater than a threshold of 52 determined in the step of obtaining an actual grounded part.

As compared to FIG. 4B, FIG. 4A includes a smaller region of not more than the binarization threshold determined in the step of obtaining a void space in the whole (100%, area%) first snapshot image. In other words, the percentage (%) of the region enclosed by the dashed line, specifically a combined region of the actual grounded part and the water film part, is smaller in FIG. 4A than in FIG. 4B. In this case, the tire in FIG. 4A can be evaluated as having a faster water drainage ability than the tire in FIG. 4B.

Image processing or similar techniques may be used to determine the area percentages of the region of the actual grounded part, the region of the water film part, the region of the void space, and the combined region of the actual grounded part and the water film part in the whole (100%, area%) snapshot image.

<Tire>

The present invention relates to a tire including a tread, the tire having an area percentage S (%) determined in the above-described method of evaluating the water drainage performance of tires and a thickness T (mm) of the tread, the S and T satisfying the following formulas (1) and (2):

$$(1) \quad S < 30$$

$$(2) \quad S \times T \leq 400.$$

The tire has excellent ice grip performance.

The mechanism for the effect is not exactly clear, but it is believed to be as follows.

Fast removal of a water film between the tire and ice can increase the duration of close contact between the tread rubber of the tire and ice (formula (1)). Moreover, a thin tread rubber can suppress heat build-up inside the rubber. Thus, generation of a new water film formed by molten ice can be suppressed even in long close contact between the tire surface and ice (formula (2)). Consequently, good ice grip performance is presumably achieved.

The tire is particularly preferably a tire that has an area percentage S (%, area%) determined in a method of evaluating the water drainage performance of tires described below and a thickness T (mm) of the tread, the S and T satisfying the formulas (1) and (2). The method of evaluating the water drainage performance of tires includes:

shooting a video of a tire rolling on a transparent or translucent plate provided with a water film from below the transparent or translucent plate;

processing a snapshot image of the shot video into regions of an actual grounded part, a water film part, and a void space; and

calculating a ratio of the actual grounded part and the water film part,

wherein the water film includes a suspension,

wherein, in the image processing, a binarization threshold to separate the actual grounded part from regions other than the actual grounded part is a value having a highest frequency in a brightness distribution; a binarization threshold to separate the void space from regions other than the void space is determined by discriminant analysis; and all snapshot images constituting the shot video are subjected to separation into the regions of the actual grounded part, the water film part, and the void space; and

wherein the ratio to be calculated in the calculation is an area percentage (area%) of a combined region of the actual grounded part and the water film part in a whole 100% area (area%) of a first snapshot image in which the region of the actual ground part first occupies 1.0% (area%) or more of the snapshot image.

The tire of the present invention includes a tread.

The tread includes a tread rubber composition.

The tread rubber composition contains one or more rubber components.

Rubber components usable in the tread rubber composition contribute to crosslinking and generally correspond to polymer components which have a weight average molecular weight (Mw) of 10000 or more and which are not extractable with acetone. The rubber components are solid at room temperature (25°C).

The weight average molecular weight of the rubber components is preferably 50000 or more, more preferably 150000 or more, still more preferably 200000 or more, while it is preferably 2000000 or less, more preferably 1500000 or less, still more preferably 1000000 or less. When the weight average molecular weight is within the range indicated above, the advantageous effect tends to be better achieved.

Herein, the weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) and calibrated with polystyrene standards.

Examples of the rubber components include isoprene-based rubbers, polybutadiene rubbers (BR), styrene-butadiene rubbers (SBR), styrene-isoprene-butadiene rubbers (SIBR), ethylene-propylene-diene rubbers (EPDM), chloroprene rubbers (CR), and acrylonitrile-butadiene rubbers (NBR). Examples also include butyl-based rubbers and fluororubbers. These may be used alone or in combinations of two or more. To better achieve the effect, isoprene-based rubbers, BR, and SBR are preferred, with isoprene-based rubbers and BR being more preferred among these.

The rubber components may be either unmodified or modified rubbers.

The modified rubbers may be any rubber having a functional group interactive with filler such as silica. Examples include a chain end-modified rubber obtained by modifying at least one chain end of a rubber with a compound (modifier) having the above functional group (i.e., a chain end-modified rubber terminated with the functional group); a backbone-modified rubber having the functional group in the backbone; a backbone- and chain end-modified rubber having the functional group in both the backbone and a chain end (e.g., a backbone- and chain end-modified rubber in which the backbone has the functional group and at least one chain end is modified with the modifier); and a chain end-modified rubber into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Amino groups, alkoxy groups, and alkoxysilyl groups are preferred among these. The amino groups are not limited and are preferably amino groups whose hydrogen atom is replaced with a C1-C6 alkyl group. The alkoxy groups are not limited and are preferably C1-C6 alkoxy groups. The alkoxysilyl groups are not limited and are preferably C1-C6 alkoxysilyl groups.

A hydrogenated rubber is also usable as a rubber.

Examples of isoprene-based rubbers include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. Modified isoprene-based rubbers which have functional groups described for the modified rubbers are also usable. These may be used alone or in combinations of two or more.

The amount of isoprene-based rubbers, if present, in the tread rubber composition based on 100% by mass of the rubber component content is preferably 5% by mass or more, more preferably 20% by mass or more, still more preferably 30% by mass or more. The upper limit is preferably 60% by mass or less, more preferably 50% by mass or less, still more preferably 40% by mass or less. When the amount is within the range indicated above, the advantageous effect tends to be better achieved.

Any BR may be used, and examples include high-cis BR having a high cis content, BR containing syndiotactic polybutadiene crystals, and BR synthesized using rare earth catalysts (rare earth-catalyzed BR). These may be used alone or in combinations of two or more. The BR preferably includes high-cis BR having a cis content of 90% by mass or higher. The cis content is more preferably 95% by mass or higher, still more preferably 97% by mass or higher. Here, the cis content can be measured by infrared absorption spectrometry.

When one type of BR is used, the cis content of the BR refers to the cis content of the one BR, while when multiple types of BR are used, it refers to the average cis content.

The average cis content of the BR can be calculated using the equation: {Σ(amount of each BR × cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= (20 × 90 + 10 × 40)/(20 + 10)).

Moreover, the BR may be either unmodified or modified BR. Examples of the modified BR include those into which functional groups as listed for the modified rubbers have been introduced. Hydrogenated polybutadiene rubbers may also be used as the BR.

Usable BR may be commercially available from Ube Industries, Ltd., JSR Corporation, Asahi Kasei Corporation, Zeon Corporation, etc.

The amount of BR, if present, in the tread rubber composition based on 100% by mass of the rubber component content is preferably 20% by mass or more, more preferably 50% by mass or more, still more preferably 55% by mass or more, particularly preferably 60% by mass or more. The upper limit is preferably 90% by mass or less, more preferably 80% by mass or less, still more preferably 750 by mass or less. When the amount is within the range indicated above, the advantageous effect tends to be better achieved.

Non-limiting examples of the SBR include emulsion-polymerized styrene-butadiene rubber (E-SBR) and solution-polymerized styrene-butadiene rubber (S-SBR). These may be used alone or in combinations of two or more.

The styrene content of the SBR is preferably 1% by mass or higher, more preferably 3% by mass or higher, still more preferably 5% by mass or higher. The styrene content is preferably 30% by mass or lower, more preferably 20% by mass or lower, still more preferably 15% by mass or lower, particularly preferably 10% by mass or lower. When the styrene content is within the range indicated above, the advantageous effect tends to be better achieved.

Herein, the styrene content can be determined by $^1$H-NMR analysis.

When one type of SBR is used, the styrene content of the SBR refers to the styrene content of the one SBR, while when multiple types of SBR are used, it refers to the average styrene content.

The average styrene content of the SBR can be calculated using the equation: {Σ(amount of each SBR × styrene content of the each SBR)}/amount of total SBR. For example, when 100% by mass of rubber components include 85% by mass of a SBR having a styrene content of 40% by mass and 5% by mass of a SBR having a styrene content of 25% by mass, the average styrene content of the SBR is 39.2% by mass (= (85 × 40 + 5 × 25)/(85 + 5)).

The vinyl bond content of the SBR is preferably 200 by mass or higher, more preferably 35% by mass or higher, still more preferably 40% by mass or higher, particularly preferably 42% by mass or more. The vinyl bond content is preferably 70% by mass or lower, more preferably 60% by mass or lower, still more preferably 50% by mass or lower. When the vinyl bond content is within the range indicated above, the advantageous effect tends to be better achieved.

Herein, the vinyl bond content (1,2-butadiene unit content) can be measured by infrared absorption spectrometry.

The vinyl bond content (1,2-butadiene unit content) of the SBR refers to the vinyl bond content (unit: % by mass) based on the total mass of the butadiene moieties in the SBR taken as 100. The sum of the vinyl content (% by mass), the cis content (% by mass), and the trans content (% by mass) equals 100 (% by mass). When one type of SBR is used, the vinyl bond content of the SBR refers to the vinyl bond content of the one SBR, while when multiple types of SBR are used, it refers to the average vinyl bond content.

The average vinyl bond content of the SBR can be calculated using the equation: Σ{amount of each SBR × (100 (% by mass) - styrene content (% by mass) of the each SBR) × vinyl bond content (% by mass) of the each SBR}/Σ{amount of each SBR × (100 (% by mass) - styrene content (% by mass) of the each SBR)}. For example, when 100 parts by mass of rubber components include 75 parts by mass of SBR having a styrene content of 40% by mass and a vinyl bond content of 30% by mass, 15 parts by mass of SBR having a styrene content of 25% by mass and a vinyl bond content of 20% by mass, and the remaining 10 parts by mass of a rubber component other than SBR, the average vinyl bond content of the SBR is 28% by mass (= {75 × (100 (% by mass) - 40 (% by mass)) × 30 (% by mass) + 15 × (100 (% by mass) - 25 (% by mass)) × 20 (% by mass)}/{75 × (100 (% by mass) - 40 (% by mass)) + 15 × (100 (% by mass) - 25 (% by mass))}.

SBR products manufactured or sold by Sumitomo Chemical Co., Ltd., JSR Corporation, Asahi Kasei Corporation, Zeon Corporation, etc. may be used as the SBR.

The amount of SBR, if present, in the tread rubber composition based on 100% by mass of the rubber component content is preferably 5% by mass or more, more preferably 10% by mass or more, still more preferably 15% by mass or more. The upper limit is preferably 40% by mass or less, more preferably 30% by mass or less, still more preferably 25% by mass or less. When the amount is within the range indicated above, the advantageous effect tends to be better achieved.

To better achieve the advantageous effect, the tread rubber composition desirably contains a water-soluble filler.

The median particle size (median size, D50) of the water-soluble filler is preferably 0.4 um or more, more preferably 0.6 um or more, still more preferably 1.0 um or more. The upper limit is preferably 200 um or less, more preferably 150 um or less, still more preferably 100 um or less, further still more preferably 50 um or less, particularly preferably 20 um or less. When the median particle size is within the range indicated above, the advantageous effect tends to be better achieved.

Herein, the median particle size of the water-soluble filler may be measured by a laser diffraction method. The median particle size means the particle size corresponding to the 50th percentile of a mass-based particle size distribution obtained by a laser diffraction method.

The median particle size of the water-soluble filler is measured by the following method.

[Measurement of median particle size (median size) of water-soluble filler]

The median particle size is measured by laser diffraction using SALD-2000J available from Shimadzu Corporation through the following operation.

<Measurement operation>

The water-soluble filler is dispersed in a solution mixture of a dispersion solvent (toluene) and a dispersant (a 10% by mass solution of sodium di(2-ethylhexyl) sulfosuccinate in toluene) at room temperature. The dispersion is stirred for five minutes under ultrasonic irradiation to prepare a test solution. The test solution is transferred to a batch cell. One minute later, the measurement is performed (refractive index: 1.70-0.20 i).

Examples of the water-soluble filler include water-soluble inorganic salts and water-soluble organic substances. These may be used alone or in combinations of two or more.

Examples of the water-soluble inorganic salts include metal sulfates such as magnesium sulfate, sodium sulfate, and potassium sulfate; metal chlorides such as potassium chloride, sodium chloride, calcium chloride, and magnesium chloride; metal hydroxides such as potassium hydroxide and sodium hydroxide; carbonates such as potassium carbonate, sodium carbonate, and calcium hydrogen carbonate; and phosphates such as sodium hydrogen phosphate and sodium dihydrogen phosphate.

Examples of the water-soluble organic substances include lignin derivatives and saccharides.

Suitable examples of the lignin derivatives include lignin sulfonic acid and lignosulfonates. The lignin derivatives may be prepared by either a sulfite pulping method or a kraft pulping method.

Examples of the lignosulfonates include alkali metal salts of lignin sulfonic acid, alkaline earth metal salts of lignin sulfonic acid, ammonium salts of lignin sulfonic acid, and alcohol amine salts of lignin sulfonic acid. Preferred among these are alkali metal salts (e.g., potassium salts or sodium salts) of lignin sulfonic acid and alkaline earth metal salts (e.g., calcium salts, magnesium salts, lithium salts, or barium salts) of lignin sulfonic acid.

The lignin derivatives preferably have a degree of sulfonation of 1.5 to $8.0/OCH_3$. Such lignin derivatives include a lignin sulfonic acid and/or lignosulfonate in which lignin and/or a degradation product thereof is at least partially substituted with a sulfo group (sulfone group). The sulfo group of the lignin sulfonic acid may be unionized, or the hydrogen atom of the sulfo group may be replaced by an ion such as a metal ion. The degree of sulfonation is more preferably 3.0 to $6.0/OCH_3$. When the degree of sulfonation is within the range indicated above, the advantageous effect tends to be more suitably achieved.

The degree of sulfonation of the lignin derivative particle (lignin derivative that forms the particle) refers to the ratio of introduced sulfo groups calculated by the following equation:

```
Degree of sulfonation (/OCH₃) =
(S (mol) in sulfone groups in the lignin
derivative)/(methoxyl groups (mol) in the lignin
derivative).
```

The saccharides may be any monosaccharide, oligosaccharide, or polysaccharide having any number of carbon atoms. Examples of the monosaccharide include trioses such as aldotriose and ketotriose; tetroses such as erythrose and threose; pentoses such as xylose and ribose; hexoses such as mannose, allose, altrose, and glucose; and heptoses such as sedoheptulose. Examples of the oligosaccharide include disaccharides such as sucrose and lactose; trisaccharides such as raffinose and melezitose; tetrasaccharides such as acarbose and stachyose; and higher oligosaccharides such as xylooligosaccharide and cellooligosaccharide. Examples of the polysaccharide include glycogen, starch (amylose, amylopectin), cellulose, hemicellulose, dextrin, and glucan.

The water-soluble filler is preferably a water-soluble inorganic salt, more preferably a metal sulfate, still more preferably magnesium sulfate. Preferred among magnesium sulfate are anhydrous magnesium sulfate, magnesium sulfate dihydrate, and magnesium sulfate trihydrate, with anhydrous magnesium sulfate being more preferred. Sodium sulfate is also preferred, and anhydrous sodium sulfate is more preferred.

The amount of the water-soluble filler per 100 parts by mass of the rubber component content in the tread rubber composition is preferably 5 parts by mass or more, more preferably 15 parts by mass or more, still more preferably 30 parts by mass or more, particularly preferably 60 parts by mass or more, while it is preferably 100 parts by mass or less, more preferably 90 parts by mass or less, still more preferably 80 parts by mass or less. When the amount is within the range indicated above, the advantageous effect tends to be more suitably achieved.

To better achieve the advantageous effect, the tread rubber composition desirably contains vulcanized rubber particles.

The term "vulcanized rubber particles" refers to particles made of vulcanized rubber. Specific examples of usable vulcanized rubber particles include rubber powder defined in JIS K 6316:2017. In view of environmental friendliness and cost, recycled rubber powder produced from crushed waste tires or the like is preferred. One type of these may be used alone, or two or more types may be used in combination.

Usable vulcanized rubber particles may be commercially available from Lehigh, MURAOKA RUBBER RECLAIMING Co., Ltd., etc. Herein, vulcanized rubber particles are not included in the rubber components.

The average particle size of the vulcanized rubber particles is preferably 5 um or more, more preferably 8 um or more, still more preferably 10 um or more, while it is preferably 200 um or less, more preferably 150 um or less, still more preferably 100 um or less, particularly preferably 50 um or less. When the average particle size is within the range indicated above, the advantageous effect tends to be better achieved.

The average particle size of vulcanized rubber particles is a mass-based average particle size calculated from a particle size distribution measured in accordance with JIS Z 8815:1994.

The amount of the vulcanized rubber particles per 100 parts by mass of the rubber component content is preferably 5 parts by mass or more, more preferably 15 parts by mass or more, still more preferably 40 parts by mass or more, particularly preferably 50 parts by mass or more, while it is preferably 150 parts by mass or less, more preferably 120 parts by mass or less, still more preferably 100 parts by mass or less. When the amount is within the range indicated above, the advantageous effect tends to be better achieved.

To better achieve the advantageous effect, the tread rubber composition preferably contains a surface roughening agent.

Any surface roughening agent may be used. Examples include eggshell powder, short fibers, zinc oxide whiskers, husk powder, shirasu particles, ground walnut, volcanic ash, and fine iron particles. The surface roughening powder may also be rubber powder such as reclaimed rubber or vulcanized rubber powder. These may be used alone or in combinations of two or more. Eggshell powder is preferred among these. The eggshell powder can be prepared by grinding eggshells, and its main component is calcium carbonate.

The average particle size of the surface roughening agent (preferably eggshell powder) is preferably 5 um or more, more preferably 7 um or more, still more preferably 10 um or more. The upper limit is not limited, while it is preferably 150 um or less, more preferably 100 um or less, still more preferably 70 um or less, particularly preferably 50 um or less. When the average particle size is within the range indicated above, the advantageous effect tends to be better achieved.

The average particle size of the surface roughening agent (eggshell powder) is measured using a particle size distribution analyzer.

Usable eggshell powder may be commercially available from Green Techno21, Kewpie Corporation, etc.

The amount of the surface roughening agent per 100 parts by mass of the rubber component content in the tread rubber composition is preferably 5 parts by mass or more, more preferably 10 parts by mass or more, still more preferably 15 parts by mass or more, particularly preferably 20 parts by mass or more, while it is preferably 50 parts by mass or less, more preferably 40 parts by mass or less, still more preferably 35 parts by mass or less. When the amount is within the range indicated above, the advantageous effect tends to be better achieved. The amount of eggshell powder is also suitably within the range indicated above.

To better achieve the advantageous effect, the tread rubber composition desirably contains an inorganic filler.

Non-limiting examples of the inorganic filler include known materials in the rubber field, such as silica, calcium carbonate, talc, alumina, clay, aluminum hydroxide, aluminum oxide, and mica.

The amount of the inorganic filler per 100 parts by mass of the rubber component content in the tread rubber composition is preferably 30 parts by mass or more, more preferably 50 parts by mass or more, still more preferably 55 parts by mass or more, particularly preferably 60 parts by mass or more. The upper limit of the amount is not limited, while it is preferably 150 parts by mass or less, more preferably 100 parts by mass or less, still more preferably 80 parts by mass or less, particularly preferably 70 parts by mass or less. When the amount is within the range indicated above, the advantageous effect can be suitably achieved.

To better achieve the advantageous effect, silica is preferred among the inorganic fillers.

Non-limiting examples of the silica include dry silica (anhydrous silica) and wet silica (hydrous silica). Wet silica is preferred among these because it contains a large number of silanol groups.

The nitrogen adsorption specific surface area ($N_2SA$) of the silica is preferably 30 m$^2$/g or more, more preferably 100 m$^2$/g or more, still more preferably 125 m$^2$/g or more. The $N_2SA$ of the silica is preferably 300 m$^2$/g or less, more preferably 250 m$^2$/g or less, still more preferably 200 m$^2$/g or less, further still more preferably 175 m$^2$/g or less. When the $N_2SA$ is within the range indicated above, the advantageous effect tends to be better achieved.

Here, the $N_2SA$ of the silica is measured by a BET method in accordance with ASTM D3037-93.

Usable silica may be commercially available from Degussa, Rhodia, Tosoh Silica Corporation, Solvay Japan, Tokuyama Corporation, etc.

The amount of the silica per 100 parts by mass of the rubber component content in the tread rubber composition is preferably 60 parts by mass or more, more preferably 70 parts by mass or more, still more preferably 80 parts by mass or more, particularly preferably 100 parts by mass or more. The upper limit of the amount is not limited, while it is preferably 300 parts by mass or less, more preferably 200 parts by mass or less, still more preferably 150 parts by mass or less. When the amount is within the range indicated above, the advantageous effect can be suitably achieved.

To better achieve the advantageous effect, the tread rubber composition preferably contains carbon black.

Non-limiting examples of the carbon black include N134, N110, N220, N234, N219, N339, N330, N326, N351, N550, and N762. Usable carbon black may be commercially available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. These may be used alone or in combinations of two or more.

The nitrogen adsorption specific surface area ($N_2SA$) of the carbon black is preferably 30 m$^2$/g or more, more preferably 50 m$^2$/g or more, still more preferably 70 m$^2$/g or more. The $N_2SA$ is preferably 200 m$^2$/g or less, more preferably 150 m$^2$/g or less, still more preferably 130 m$^2$/g or less, further still more preferably 120 m$^2$/g or less, particularly preferably 114 m$^2$/g or less. When the $N_2SA$ is within the range indicated above, the advantageous effect tends to be better achieved.

Here, the nitrogen adsorption specific surface area of the carbon black can be determined in accordance with JIS K 6217-2:2001.

The amount of the carbon black per 100 parts by mass of the rubber component content in the tread rubber composition is preferably 1 part by mass or more, more preferably 3 parts by mass or more. The upper limit of the amount is preferably 30 parts by mass or less, more preferably 20 parts by mass or less, still more preferably 10 parts by mass or less, particularly preferably 5 parts by mass or less. When the amount is within the range indicated above, the advantageous effect can be suitably achieved.

Examples of fillers usable other than silica, carbon black, and water-soluble fillers include difficult-to-disperse fillers.

Examples of difficult-to-disperse fillers include microfibrillated plant fibers, short fibrous cellulose, and gel compounds. Microfibrillated plant fibers are preferred among these.

To obtain good reinforcement, cellulose microfibrils are preferred among the microfibrillated plant fibers. Any cellulose microfibril derived from a natural product may be used. Examples include those derived from resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. These microfibrillated plant fibers may be used alone or in combinations of two or more.

Herein, the term "cellulose microfibril" typically refers to cellulose fibers having an average fiber diameter of not more than 10 um, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter indicated above.

The tread rubber composition desirably contains a silane coupling agent.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable silane coupling agents may be commercially available from Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of the silane coupling agent per 100 parts by mass of the silica content (total 100 parts by mass of silica constituting surface-modified silica and silica contained in addition to the said silica) in the tread rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

The rubber composition preferably contains a plasticizer.

Herein, the term "plasticizer" refers to a component that imparts plasticity to rubber components. Examples include liquid plasticizers (plasticizers which are liquid at room temperature (25°C)) and resins (resins which are solid at room temperature (25°C)).

The amount of the plasticizer (total amount of plasticizers) per 100 parts by mass of the rubber component content in the tread rubber composition is preferably 10 parts by mass or more, more preferably 20 parts by mass or more, still more preferably 25 parts by mass or more, further still more preferably 30 parts by mass or more, further still more preferably 35 parts by mass or more, further still more preferably 40 parts by mass or more, further still more preferably 45 parts by mass or more, most preferably 55 parts by mass or more. The upper limit is preferably 120 parts by mass or less, more preferably 100 parts by mass or less, still more preferably 90 parts by mass or less. When the amount is within the range indicated above, the advantageous effect tends to be better achieved.

Non-limiting examples of the liquid plasticizers (plasticizers which are liquid at room temperature (25°C)) usable in the tread rubber composition include oils and liquid polymers (liquid resins, liquid diene polymers, liquid farnesene polymers, etc.). To better achieve the advantageous effect, the tread rubber composition preferably contains a liquid polymer. These may be used alone or in combinations of two or more.

The amount of the liquid plasticizers per 100 parts by mass of the rubber component content in the tread rubber composition is preferably 5 parts by mass or more, more preferably 15 parts by mass or more, still more preferably 20 parts by mass or more, further still more preferably 25 parts by mass or more, further still more preferably 30 parts by mass or more, further still more preferably 35 parts by mass or more, further still more preferably 40 parts by mass or more, most preferably 50 parts by mass or more. The upper limit is preferably 120 parts by mass or less, more preferably 100 parts by mass or less, still more preferably 90 parts by mass or less. When the amount is within the range indicated above, the advantageous effect tends to be better achieved.

Examples of the oils include process oils, plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Waste cooking oils which are the plant oils collected after used as edible oils are also usable. Usable oils may be commercially available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin Oillio Group., Ltd., etc. Process oils, such as paraffinic process oils, aromatic process oils, and naphthenic process oils, and plant oils are preferred among these.

The amount of the oils per 100 parts by mass of the rubber component content in the tread rubber composition is preferably 5 parts by mass or more, more preferably 15 parts by mass or more, still more preferably 20 parts by mass or more, further still more preferably 30 parts by mass or more, further still more preferably 35 parts by mass or more, further still more preferably 40 parts by mass or more, most preferably 50 parts by mass or more. The upper limit is preferably 120 parts by mass or less, more preferably 100 parts by mass or less, still more preferably 90 parts by mass or less. When the amount is within the range indicated above, the advantageous effect tends to be better achieved.

The amount of oils includes the amount of extender oils in oil-extended rubbers.

Examples of the liquid resins among the liquid polymers include terpene resins (including terpene-phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenolic resins, olefin resins, polyurethane resins, and acrylic resins. Hydrogenated products of the foregoing resins are also usable.

Examples of the liquid diene polymers among the liquid polymers include liquid styrene-butadiene copolymers (liquid SBR), liquid butadiene polymers (liquid BR), liquid isoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at 25°C. These polymers may be modified at a chain end or the backbone with a polar group. Hydrogenated products of these polymers are also usable.

The number average molecular weight (Mn) of the liquid polymers is preferably $1.0 \times 10^3$ to $5.0 \times 10^4$, more preferably $2.0 \times 10^3$ to $1.5 \times 10^4$ as measured by gel permeation chromatography (GPC) and calibrated with polystyrene standards. The lower limit and the upper limit of the Mn of the liquid polymers may be 2500.

Herein, the Mn of the liquid polymers is measured by gel permeation chromatography (GPC) and calibrated with polystyrene standards.

Usable liquid polymers may be commercially available from Sartomer, Kraray, CRAY VALLEY, etc.

The amount of the liquid polymers per 100 parts by mass of the rubber component content in the tread rubber composition is preferably 1 part by mass or more, more preferably 3 parts by mass or more, still more preferably 5 parts by mass or more. The upper limit is preferably 50 parts by mass or less, more preferably 20 parts by mass or less, still more preferably 10 parts by mass or less. When the amount is within the range indicated above, the advantageous effect tends to be better achieved.

Examples of the resins (resins which are solid at room temperature (25°C)) usable in the tread rubber composition include aromatic vinyl polymers, coumarone-indene resins, coumarone resins, indene resins, phenolic resins, rosin resins, petroleum resins, terpene resins, and acrylic resins, all of which are solid at room temperature (25°C). These resins may be hydrogenated. These may be used alone or in combinations of two or more. Aromatic vinyl polymers, petroleum resins, and terpene resins are preferred among these.

The amount of the resins per 100 parts by mass of the rubber component content in the tread rubber composition is preferably 1 part by mass or more, more preferably 3 parts by mass or more, still more preferably 5 parts by mass or more. The upper limit is preferably 50 parts by mass or less, more preferably 20 parts by mass or less, still more preferably 10 parts by mass or less. When the amount is within the range indicated above, the advantageous effect tends to be better achieved.

The softening point of the resins is preferably 50°C or higher, more preferably 55°C or higher, still more preferably 60°C or higher. The upper limit is preferably 160°C or lower, more preferably 150°C or lower, still more preferably 145°C or lower. When the softening point is within the range indicated above, the advantageous effect tends to be better achieved. The softening point of the resins is determined in accordance with JIS K 6220-1:2001 using a ring and ball softening point measuring apparatus. The temperature at which the ball drops down is defined as the softening point.

The term "aromatic vinyl polymers" refers to polymers containing aromatic vinyl monomers as structural units. Examples include resins produced by polymerization of $\alpha$-methylstyrene and/or styrene. Specific examples include styrene homopolymers (styrene resins), $\alpha$-methylstyrene homopolymers (a-methylstyrene resins), copolymers of $\alpha$-methylstyrene and styrene, and copolymers of styrene and other monomers.

The term "coumarone-indene resins" refers to resins containing coumarone and indene as the main monomer components forming the skeleton (backbone) of the resins. Examples of monomer components which may be contained in the skeleton in addition to coumarone and indene include styrene, $\alpha$-methylstyrene, methylindene, and vinyltoluene.

The term "coumarone resins" refers to resins containing coumarone as the main monomer component forming the skeleton (backbone) of the resins.

The term "indene resins" refers to resins containing indene as the main monomer component forming the skeleton (backbone) of the resins.

Examples of the phenolic resins include known polymers produced by reacting phenol with an aldehyde such as formaldehyde, acetaldehyde, or furfural in the presence of an acid or alkali catalyst. Preferred among these are those produced by reacting phenol with an aldehyde in the presence of an acid catalyst, such as novolac phenolic resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, and hydrogenated products of the foregoing resins. DCPD resins or hydrogenated DCPD resins are preferred among these.

The term "terpene resins" refers to polymers containing terpenes as structural units. Examples include polyterpene resins produced by polymerization of terpene compounds, and aromatic modified terpene resins produced by polymerization of terpene compounds and aromatic compounds. Examples of usable aromatic modified terpene resins also include terpene-phenol resins made from terpene compounds and phenolic compounds, terpene-styrene resins made from terpene compounds and styrene compounds, and terpene-phenol-styrene resins made from terpene compounds, phenolic compounds, and styrene compounds. Examples of the terpene compounds include $\alpha$-pinene and $\beta$-pinene. Examples of the phenolic compounds include phenol and bisphenol A. Examples of the aromatic compounds include styrene compounds, such as styrene and $\alpha$-methylstyrene.

The term "acrylic resins" refers to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitably used among these.

Usable plasticizers may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co.,

Ltd., etc.

The tread rubber composition may contain a processing aid.

Examples of the processing aid include metal salts (compounds in which hydrogen atoms of the acids are replaced by metal ions), fatty acid amides, amide esters, and fatty acid esters. These may be used alone or in combinations of two or more. Metal salts and fatty acid amides are preferred, with metal salts being more preferred among these.

Examples of the metals of the metal salts include alkali metals such as potassium and sodium, and alkaline earth metals such as calcium and barium. Magnesium, zinc, nickel, molybdenum, etc. are also usable. Alkali metals are preferred among these.

Examples of the acids of the metal salts include fatty acids such as lauric acid, myristic acid, and palmitic acid. Boric acid, carbonic acid, hydrochloric acid, nitric acid, sulfuric acid, etc. are also usable.

Usable processing aids may be commercially available from KISHIDA CHEMICAL Co., Ltd., KENEI Pharmaceutical Co., Ltd, Struktol, Performance Additives, etc.

The amount of the processing aid per 100 parts by mass of the rubber component content in the tread rubber composition is preferably 1 part by mass or more, more preferably 3 parts by mass or more, still more preferably 5 parts by mass or more, while it is preferably 12 parts by mass or less, more preferably 10 parts by mass or less, still more preferably 8 parts by mass or less. When the amount is within the range indicated above, the advantageous effect tends to be better achieved.

In view of properties such as crack resistance and ozone resistance, the tread rubber composition preferably contains an antioxidant.

Any antioxidant may be used. Examples include naphthylamine antioxidants such as phenyl-$\alpha$-naphthylamine; diphenylamine antioxidants such as octylated diphenylamine and 4,4'-bis($\alpha,\alpha'$-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine and quinoline antioxidants, with N-(1,3-dimethylbutyl)-N'-phenyl-p-phenylenediamine or polymerized 2,2,4-trimethyl-1,2-dihydroquinoline being more preferred. Usable antioxidants may be commercially available from Seiko Chemical Co., Ltd., Sumitomo Chemical Co., Ltd., Ouchi Shinko Chemical Industrial Co., Ltd., Flexsys, etc.

The amount of the antioxidant per 100 parts by mass of the rubber component content in the tread rubber composition is preferably 0.5 parts by mass or more, more preferably 2.0 parts by mass or more. The amount is preferably 7.0 parts by mass or less, more preferably 4.0 parts by mass or less.

The tread rubber composition may contain stearic acid. The amount of the stearic acid per 100 parts by mass of the rubber component content in the rubber composition is preferably 0.5 to 10 parts by mass, more preferably 0.5 to 5 parts by mass.

Here, conventionally known stearic acid may be used, including, for example, those available from NOF Corporation, Kao Corporation, Fujifilm Wako Pure Chemical Corporation, Chiba Fatty Acid Co., Ltd., etc.

The tread rubber composition may contain zinc oxide.

The amount of the zinc oxide per 100 parts by mass of the rubber component content in the tread rubber composition is preferably 0.5 to 10 parts by mass, more preferably 1 to 3 parts by mass.

Here, conventionally known zinc oxide may be used, including, for example, those available from Mitsui Mining & Smelting Co., Ltd., Toho Zinc Co., Ltd., Hakusui Tech Co., Ltd., Seido Chemical Industry Co., Ltd., Sakai Chemical Industry Co., Ltd., etc.

The tread rubber composition may contain wax.

The amount of the wax per 100 parts by mass of the rubber component content in the tread rubber composition is preferably 0.5 to 10 parts by mass, more preferably 2 to 5 parts by mass.

Any wax may be used, and examples include petroleum waxes and natural waxes. Synthetic waxes prepared by purifying or chemically treating multiple waxes are also usable. These waxes may be used alone or in combinations of two or more.

Examples of the petroleum waxes include paraffin waxes and microcrystalline waxes. The natural waxes may be any wax derived from a non-petroleum resource. Examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing waxes. Usable waxes may be commercially available from Ouchi Shinko Chemical Industrial Co., Ltd., Nippon Seiro Co., Ltd., Seiko Chemical Co., Ltd., etc.

The tread rubber composition may contain sulfur to moderately crosslink the polymer chains, thereby imparting good property balance.

The amount of the sulfur per 100 parts by mass of the rubber component content in the tread rubber composition is preferably 0.1 parts by mass or more, more preferably 0.5 parts by mass or more, still more preferably 1.0 parts by mass or more. The amount is preferably 6.0 parts by mass or less, more preferably 4.0 parts by mass or less, still more preferably 3.0 parts by mass or less.

Examples of the sulfur include those commonly used in the rubber industry, such as powdered sulfur, precipitated sulfur, colloidal sulfur, insoluble sulfur, highly dispersible sulfur, and soluble sulfur. Usable sulfur may be commercially available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The tread rubber composition may contain a vulcanization accelerator.

The amount of the vulcanization accelerator per 100 parts by mass of the rubber component content in the tread rubber composition is usually 0.3 to 10 parts by mass, preferably 0.5 to 4 parts by mass.

Any type of vulcanization accelerator may be used, including usually used ones. Examples of the vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide vulcanization accelerators and guanidine vulcanization accelerators are preferred among these.

In addition to the above-described components, the tread rubber composition may appropriately contain additives usually used as needed in the application field, such as releasing agents and pigments. The amount of the additives per 100 parts by mass of the rubber component content in the tread rubber composition is preferably 0.5 to 10 parts by mass, more preferably 2 to 5 parts by mass.

The tread rubber composition can be produced by known methods. For example, it can be produced by kneading the components using a rubber kneading machine such as an open roll mill or a Banbury mixer, optionally followed by crosslinking. The kneading conditions include a kneading temperature of usually 50°C to 200°C, preferably 80°C to 190°C, and the kneading time is usually 30 seconds to 30 minutes, preferably 1 minute to 30 minutes.

The tire of the present invention can be produced from the tread rubber composition by usual methods.

For example, an unvulcanized rubber composition containing various materials is extruded into the shape of a tread and then assembled with other tire components in a usual manner on a tire building machine to build an unvulcanized tire. The unvulcanized tire is heated and pressurized in a vulcanizer to produce a tire.

In the tire of the present invention, the area percentage S (%, area%) determined in the method of evaluating the water drainage performance of tires satisfies the following formula (1):

$$(1) \quad S < 30.$$

The area percentage S is preferably 28% or less, more preferably 260 or less, still more preferably 250 or less, further still more preferably 210 or less, particularly preferably 180 or less. The lower limit of the S is not limited, while it is preferably 5% or more, more preferably 9% or more, still more preferably 120 or more, particularly preferably 150 or more. When the S is within the range indicated above, the advantageous effect tends to be better achieved.

In the tire, the area percentage S (%) and the thickness T (mm) of the tread satisfy the following formula (2) :

$$(2) \quad S \times T \leq 400 \ (\text{unit: } \% \cdot mm)$$

The product of $S \times T$ is preferably 390 or less, more preferably 380 or less, still more preferably 364 or less, further still more preferably 360 or less, further still more preferably 338 or less, further still more preferably 286 or less, particularly preferably 252 or less, most preferably 234 or less. The lower limit of the product of $S \times T$ is not limited, while it is preferably 100 or more, more preferably 130 or more, still more preferably 150 or more, particularly preferably 170 or more. When the product is within the range indicated above, the advantageous effect tends to be better achieved.

In the tire, the area percentage S is desirably an area percentage (%) determined in a third step in an evaluation method that is the method of evaluating the water drainage performance of tires and that satisfies the following conditions (1) to (4):

(1) the water film includes a suspension:
(2) the method includes a first step to demine a brightness value having the highest frequency in the brightness distribution of a stationary image as a binarization threshold to separate an actual grounded part from a non-actual grounded part or a void space;

(3) the method includes a second step to determine a binarization threshold by Otsu's method; and

(4) the method includes a third step to obtain a first snapshot image that is a snapshot image in which the region of the actual grounded part corresponding to not more than the binarization threshold determined in the first step first occupies 1.0% (area%) or more.

In the tire, to better achieve the advantageous effect, the thickness T (mm) of the tread desirably satisfies the following formula:

$$5.0 \leq T \leq 18.0.$$

The lower limit of the thickness T is preferably 6.0 mm or more, more preferably 9.0 mm or more, still more preferably 11.0 mm or more. The upper limit is preferably 16.0 mm or less, more preferably 15.0 mm or less, still more preferably 14.0 mm or less, further still more preferably 13.0 mm or less. When the T is within the range indicated above, the advantageous effect tends to be better achieved.

The term "thickness T of a tread" refers to the largest thickness (thickness of the thickest part of the tread portion) among the thicknesses of the tread at points on the tread surface.

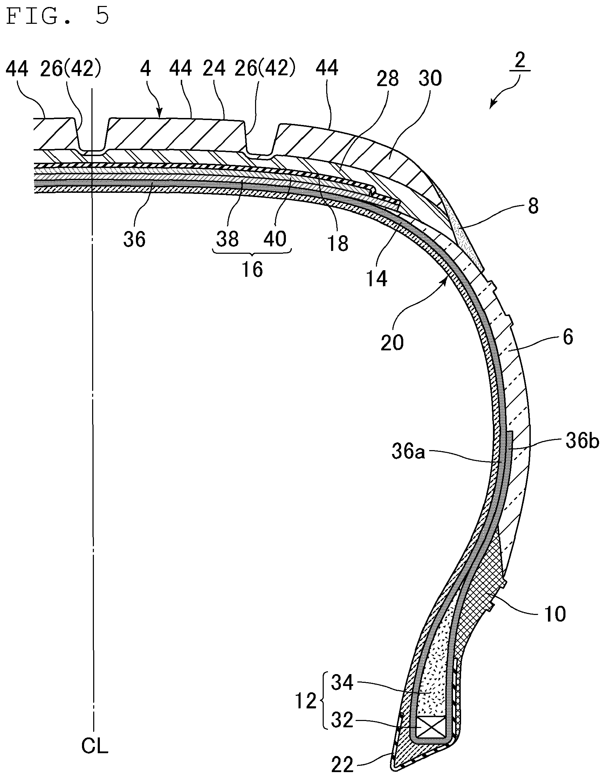

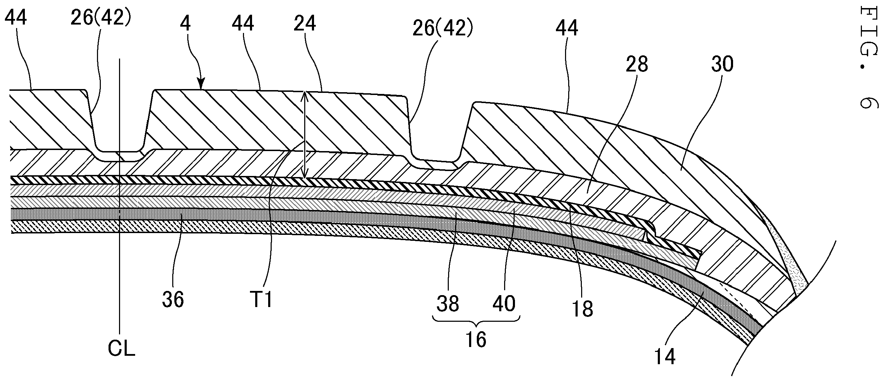

The thickness of a tread at a point on the tread surface is measured along the normal of the tread surface at the point. The thickness T of the tread portion is the largest thickness among the thicknesses measured at points on the tread surface. The thickness at each point corresponds to the distance from the tread surface to an interface of another fiber material-containing reinforcement layer such as a belt layer or a carcass layer, the interface being on the side of the outermost surface of the tire, in a cross-section including the axis of the tire. The thickness at a point where a groove exists corresponds to a linear distance measured from a plane defined by a straight line connecting the edges of the groove on the outermost surface side with respect to the tire radial direction. Specifically, in the case of a two-layer tread consisting of a cap layer and a base layer shown in FIGS. 5 and 6 described later, the thickness at each point corresponds to a distance from a tread surface 24 to the interface, which is on the side of the outermost surface of the tire, of a band 18. In a tire including a monolayer tread or a tread consisting of three or more layers instead of the two-layer tread, the thickness at each point corresponds to a distance from the tread surface to the interface, which is on the side of the outermost surface of the tire, of a band, as described for the two-layer tread.

The tread portion in the present invention may consist of one layer of a cap rubber layer or two layers consisting of a cap rubber layer and a base rubber layer provided on the inner side of the cap rubber layer. Moreover, the tread portion may consist of three layers or four or more layers.

Herein, the dimension of the thickness T of a tread is determined by dismantling a tire and measuring the thickness T of a tread taken from the tire, unless otherwise stated.

In the tire, to better achieve the advantageous effect, a land ratio L (%) and the area percentage S (%) desirably satisfy the following formula:

$$L/S \geq 2.0$$

(unit: dimensionless).

The lower limit of the ratio L/S is preferably 2.3 or higher, more preferably 2.5 or higher, still more preferably 2.7 or higher. The upper limit is preferably 3.5 or lower, more preferably 3.2 or lower, still more preferably 3.0 or lower. When the ratio L/S is within the range indicated above, the advantageous effect tends to be better achieved.

In the tire, to better achieve the advantageous effect, the land ratio L (%) preferably satisfies the following formula:

$$L \geq 50\%.$$

The lower limit of the land ratio is preferably 650 or higher, more preferably 680 or higher, still more preferably 700 or higher. The upper limit of the land ratio is preferably 900 or lower, more preferably 850 or lower, still more preferably 820 or lower, particularly preferably 80% or lower. When the land ratio is within the range indicated above, the advantageous effect tends to be better achieved.

Herein, when the tire is a pneumatic tire, the land ratio (L) is calculated from a contact patch obtained under the conditions of normal rim, normal internal pressure, and normal load. When the tire is a non-pneumatic tire, the L can be calculated as described above without normal internal pressure.

The term "normal rim" refers to a rim specified for each tire by the standard in a standard system including standards according to which the tire is provided, and may be, for example, "standard rim" with the applicable size listed in "JATMA YEAR BOOK" of The Japan Automobile Tyre Manufacturers Association, Inc. (JATMA), "measuring rim" listed in "Standards Manual" of The European Tyre and Rim Technical Organisation (ETRTO), or "design rim" listed in "YEAR BOOK" of The Tire and Rim Association, Inc. (TRA). Here, JATMA, ETRTO, and TRA will be referenced in that order, and if the referenced standard includes the applicable size, it will be followed. Moreover, for a tire which is not defined by any of the standards, it refers to a rim with the smallest diameter and, secondly, the narrowest width among the rims on which the tire can be mounted and can maintain the internal pressure, i.e., the rims that cause no air leakage between the rim and the tire.

The term "normal internal pressure" refers to an air pressure specified for each tire by the standard, and may be "maximum air pressure" in JATMA, "inflation pressure" in ETRTO, or the maximum value shown in Table "TIRE LOAD LIMITS AT VARIOUS COLD INFLATION PRESSURES" in TRA. Like "normal rim", JATMA, ETRTO, and TRA will be referenced in that order, and the corresponding standard will be followed. Moreover, for a tire which is not defined by any of the standards, it refers to a normal internal pressure of 250 kPa or more for another tire size defined by any of the standards, for which the normal rim is listed as the standard rim. When a plurality of normal internal pressures of 250 kPa or more are listed, it refers to the smallest one of these normal internal pressures.

The term "normal load" refers to a load specified for each tire by the standard in a standard system including standards according to which the tire is provided. The normal load may be "maximum load capacity" in JATMA, "load capacity" in ETRTO, or the maximum value shown in Table "TIRE LOAD LIMITS AT VARIOUS COLD INFLATION PRESSURES" in TRA. Like "normal rim" and "normal internal pressure" described above, JATMA, ETRTO, and TRA will be referenced in that order, and the corresponding standard will be followed. Moreover, for a tire which is not defined by any of the standards, the normal load $W_L$ is calculated by the following equations.

$$V = \{(Dt/2)^2 - (Dt/2 - Ht)^2\} \times \pi \times Wt$$

$$W_L = 0.000011 \times V + 175$$

$W_L$: normal load (kg)
V: virtual volume (mm$^3$) of tire
Dt: outer diameter (mm) of tire
Ht: cross-sectional height (mm) of tire
Wt: cross-sectional width (mm) of tire

The term "cross-sectional width Wt (mm)" of the tire refers to the largest width of the tire in the normal state between the outer surfaces of the sidewalls, excluding patterns, letters, and the like on the sides of the tire, if present.

The term "outer diameter Dt (mm)" of the tire refers to the outer diameter of the tire in the normal state.

The term "cross-sectional height Ht (mm)" of the tire refers to the height in the tire radial direction in a radial cross-section of the tire. Provided that the rim diameter of the tire is R (mm), the height corresponds to half of the difference between the outer diameter Dt and the rim diameter R of the tire. In other words, the cross-sectional height Ht can be determined by (Dt - R)/2.

Herein, the term "normal state" refers to a state where the tire is mounted on a normal rim (not shown) inflated to a normal internal pressure and under no load.

If measurement of the tire mounted on a normal rim is impossible, the dimensions and angles of the parts of the tire in a meridional cross-section of the tire are measured in a cross-section of the tire cut along a plane including the axis of rotation, in which the distance between the right and left beads corresponds to the distance between the beads in the tire mounted on a normal rim.

The contact patch may be determined by mounting the tire on a normal rim, applying a normal internal pressure to the tire, allowing the tire to stand still at 25°C for 24 hours, applying black ink to the tread surface of the tire, and pressing the tread surface against a cardboard at a normal load (camber angle: 0°) for transfer to the cardboard.

The transfer is performed in five positions of the tire while rotating the tire by 72° each in the circumferential direction. Namely, the contact patch is obtained five times. Here, in each of the five contact patches, portions interrupted by grooves in the contour are smoothly connected, and the resulting shape is determined as a virtual ground contact face.

The land ratio (L) is calculated by the equation:

(Average of the areas of five contact patches (parts with black ink) transferred to cardboard)/(Average of the areas of virtual ground contact faces obtained from the five contact patches) × 100 (%).

The tread rubber composition (vulcanized rubber composition) forming the tread in the tire has an acetone extractable content A (% by mass) satisfying the following formula:

$$A \geq 17\% \text{ by mass.}$$

The lower limit of the acetone extractable content A is preferably 18% by mass or higher, more preferably 20% by mass or higher, still more preferably 21% by mass or higher, further still more preferably 23% by mass or higher. The upper limit is preferably 34% by mass or lower, more preferably 31% by mass or lower, still more preferably 28% by mass or lower. When the A is within the range indicated above, the advantageous effect tends to be better achieved.

The acetone extractable content (A) in the present invention is the acetone extractable content of the rubber composition (sample) (unit: % by mass in the rubber composition (sample)) measured by the method of measuring acetone extractable content in accordance with JIS K 6229:2015.

An example of a tire of the present invention that includes a tread including the tread rubber composition is described with reference to FIG. 5.

In FIG. 5, the vertical direction corresponds to the radial direction of a tire 2, the horizontal direction corresponds to the axial direction of the tire 2, and the direction perpendicular to the paper corresponds to the circumferential direction of the tire 2. A tread portion 4 includes a cap layer 30 and a base layer 28.

Although FIG. 5 shows an example of the two-layer tread portion 4 consisting of the cap layer 30 and the base layer 28, the tread portion may be a single-layer tread or a tread including three or more layers.

In the tire 2, each sidewall 6 extends substantially inwardly in the radial direction from the end of the tread 4. The radially outer portion of the sidewall 6 is bonded to the tread 4. The radially inner portion of the sidewall 6 is bonded to a clinch 10. The sidewall 6 can prevent damage to a carcass 14.

In FIG. 5, each wing 8 is located between the tread 4 and the sidewall 6. The wing 8 is bonded to both the tread 4 and the sidewall 6.

Each clinch 10 is located substantially radially inward of the sidewall 6. The clinch 10 is located axially outward from a bead 12 and the carcass 14.

Each bead 12 is located axially inward of the clinch 10. The bead 12 includes a core 32 and an apex 34 that radially outwardly extends from the core 32. The core 32 desirably has a ring shape and contains a wound non-stretchable wire. The apex 34 is radially outwardly tapered.

The carcass 14 includes a carcass ply 36. Although the carcass 14 in the tire 2 includes one carcass ply 36, the carcass may include two or more carcass plies.

In the tire 2, the carcass ply 36 extends between the beads 12 on opposite sides along the tread 4 and the sidewalls 6. The carcass ply 36 is folded around each core 32 from the inside to the outside in the axial direction. Due to this folding, the carcass ply 36 is provided with a main portion 36a and a pair of folded portions 36b. Namely, the carcass ply 36 includes the main portion 36a and the pair of folded portions 36b.

Though not shown, the carcass ply 36 desirably includes a large number of parallel cords and a topping rubber. The absolute value of the angle of each cord to the equatorial plane is suitably from 75° to 90°. In other words, this carcass 14 preferably has a radial structure.

In FIG. 5, a belt layer 16 is located radially inward of the tread 4. The belt layer 16 is stacked on the carcass 14. The belt layer 16 reinforces the carcass 14. The belt layer 16 consists of an interior layer 38 and an exterior layer 40. As is clear from FIG. 5, the interior layer 38 is desirably slightly wider in the axial direction than the exterior layer 40. In the tire 2, the axial width of the belt layer 16 is preferably at least 0.6 times and preferably not more than 0.9 times the cross-sectional width (see JATMA) of the tire 2.

Though not shown, the interior layer 38 and the exterior layer 40 each desirably include a large number of parallel cords and a topping rubber. In other words, the belt layer 16 contains a large number of parallel cords. Each cord is tilted relative to the equatorial plane. The absolute value of the tilt angle is generally at least 10° and not greater than 35°. The tilt direction of the cords in the interior layer 38 relative to the equatorial plane is opposite to the tilt direction of the cords in the exterior layer 40 relative to the equatorial plane.

The tread 4 in the tire 2 includes the above-described tread rubber composition.

In FIG. 5, the band 18 is located radially outward of the belt layer 16. The band 18 has a width that is equal to the width of the belt layer 16 with respect to the axial direction. The band 18 may be wider than the belt layer 16.

Though not shown, the band 18 desirably includes cords and a topping rubber. The cords are spirally wound. This band 18 has what is called a jointless structure. The cords extend substantially in the circumferential direction. The angle of the cords to the circumferential direction is preferably 5° or smaller or even 2° or smaller. As the belt layer 16 is restrained by these cords, lifting of the belt layer 16 is suppressed.

In FIG. 5, the belt layer 16 and the band 18 form a reinforcement layer. The reinforcement layer may be formed only of the belt layer 16.

FIG. 6 is an enlarged view of the tread 4 and its vicinity in FIG. 5.

In FIG. 5, T1 denotes the thickness of the tread at a predetermined point on the tread surface 24. The thickness is measured along the normal of the tread surface 24 at the point. The thickness T of the tread is the largest thickness among the thicknesses at points on the surface (largest thickness of the tread portion).

Desirably, in the tire 2, the thickness T (mm) of the tread 4 and the area percentage S (%) determined in the method of evaluating the water drainage performance of tires satisfy the formula (1) S < 30 and the formula (2) S $\times$ T $\leq$ 400, preferably S $\times$ T $\leq$ 380, more preferably S $\times$ T $\leq$ 360.

Desirably, in the tire 2, the land ratio L (%) and the area percentage S (%) determined in the method of evaluating the water drainage performance of tires satisfy the formula L/S $\geq$ 2.0. Moreover, the rubber composition (vulcanized rubber composition) forming the tread 4 desirably has an acetone extractable content A (% by mass) satisfying the formula: A $\geq$ 17.0.

An innerliner 20 is located inward of the carcass 14. The innerliner 20 is bonded to the inner surface of the carcass 14. The base material rubber of the innerliner 20 is typically a butyl rubber or halogenated butyl rubber. The innerliner 20 maintains the internal pressure of the tire 2.

Each chafer 22 is located near the bead 12. In this embodiment, the chafer 22 desirably includes a rubber and a fabric impregnated with the rubber. The chafer 22 may be integrated with the clinch 10.

In the tire 2, the tread 4 has grooves 26 including main grooves 42. As shown in FIG. 5, the tread 4 has a plurality of, specifically three, main grooves 42 engraved thereon. The main grooves 42 are positioned at intervals in the axial direction. As the three main grooves 42 are engraved on the tread 4, the tread 4 is provided with four ribs 44 extending in the circumferential direction. In other words, each main groove 42 is between one rib 44 and another rib 44.

The main grooves 42 extend in the circumferential direction. The main grooves 42 are continuous in the circumferential direction without interruption. The main grooves 42 promote drainage of water present between the road surface and the tire 2 in rainy weather, for example. Thus, the tire 2 can sufficiently come in contact with the road surface even when the road surface is wet.

EXAMPLES

Examples (working examples) which are considered preferable to implement the present invention are described below. Yet, the scope of the invention is not limited to the examples.

Tires produced using the chemicals listed below according to the specifications varied as shown in the tables were examined. The results calculated according to the below-described evaluations are shown in the tables.

(Rubber components)

NR: TSR20
BR: BR730 (high-cis BR, cis content: 97% by mass) available from JSR Corporation

(Chemicals other than rubber components)

Silica: ULTRASIL VN3 ($N_2$SA: 175 m²/g) available from Degussa
Carbon black: DIABLACK I (N220, $N_2$SA: 114 m²/g, DBP: 114 mL/100 g) available from Mitsubishi Chemical Corporation
Magnesium sulfate 1: magnesium sulfate (median particle size (median diameter): 1 $\mu$m) available from Umai Chemical Co., Ltd.
Magnesium sulfate 2: magnesium sulfate (median particle size (median diameter): 50 $\mu$m) available from Umai Chemical Co., Ltd.
Magnesium sulfate 3: magnesium sulfate (median particle size (median diameter): 100 $\mu$m) available from Umai

Chemical Co., Ltd.

Magnesium sulfate 4: magnesium sulfate (median particle size (median diameter): 150 μm) available from Umai Chemical Co., Ltd.

Vulcanized rubber particles 1: rubber powder (average particle size: 10 um) available from MURAOKA RUBBER RECLAIMING Co., Ltd.

Vulcanized rubber particles 2: rubber powder (average particle size: 50 μm) available from MURAOKA RUBBER RECLAIMING Co., Ltd.

Vulcanized rubber particles 3: rubber powder (average particle size: 100 μm) available from MURAOKA RUBBER RECLAIMING Co., Ltd.

Vulcanized rubber particles 4: rubber powder (average particle size: 150 μm) available from MURAOKA RUBBER RECLAIMING Co., Ltd.

Eggshell powder 1: eggshell powder (average particle size: 10 um) available from Green Techno21

Eggshell powder 2: eggshell powder (average particle size: 50 μm) available from Green Techno21

Eggshell powder 3: eggshell powder (average particle size: 100 μm) available from Green Techno21

Silane coupling agent: Si69 (bis(3-triethoxysilylpropyl)tetrasulfide) available from Degussa

Oil: Diana Process AH-24 (aromatic process oil) available from Idemitsu Kosan Co., Ltd.

Resin: SYLVARES SA85 (a copolymer of α-methylstyrene and styrene, resin which is solid at room temperature) available from Arizona Chemical

Wax: Ozoace 0355 available from Nippon Seiro Co., Ltd.

Antioxidant: NOCRAC 6C (N-(1,3-dimethylbutyl)-N'-phenyl-p-phenylenediamine) available from Ouchi Shinko Chemical Industrial Co., Ltd.

Processing aid: ULTRA-FLOW 440 (zinc salt of fatty acid) available from Performance Additives

Zinc oxide: zinc oxide #2 available from Mitsui Mining & Smelting Co., Ltd.

Sulfur: powdered sulfur available from Tsurumi Chemical Industry Co., Ltd.

Vulcanization accelerator CZ: NOCCELER CZ (N-cyclohexyl-2-benzothiazolylsulfenamide) available from Ouchi Shinko Chemical Industrial Co., Ltd.

Vulcanization accelerator DPG: NOCCELER D (1,3,-diphenylguanidine) available from Ouchi Shinko Chemical Industrial Co., Ltd.

Liquid polymer: RICON 130 (polybutadiene, Mn: 2500) available from CLAY VALLEY

<Production of test tire>

According to the formulations in the tables, the chemicals other than the sulfur and the vulcanization accelerators are kneaded in a 16-L Banbury mixer (Kobe Steel, Ltd.) at 160°C for four minutes to obtain a kneaded mixture.

Next, the kneaded mixture is kneaded with the sulfur and vulcanization accelerators using an open roll mill at 80°C for four minutes to obtain an unvulcanized polymer composition.

The unvulcanized polymer composition is formed into the shape of a tread and assembled with other tire components on a tire building machine to build an unvulcanized tire. Subsequently, the unvulcanized tire is vulcanized at 170°C for 12 minutes, whereby a test tire (size: 195/65R15) is produced.

Test tires including compositions prepared according to the specifications varied as shown in the tables are simulated. Tables show the results calculated according to the method of evaluating the water drainage performance of tires and the method of evaluating ice grip performance described below.

The reference formulations are as follows.

Table 1: Formulation 1-14
Table 2: Formulation 2-10
Table 3: Formulation 3-9

<Method of evaluating the water drainage performance of tires>

(1) Shooting is performed by shooting stationary images and videos of the test tires by the method shown in FIGS. 2 to 4 using the tire grounded state-shooting system 101 shown in FIG. 1 under the following experimental conditions.

(Experiment conditions)

Load imposed on one tire: 375 kg

Tire: 195/65R15 (after braking-in for about 100 km)

Car speed: 5 km/h upon passing through a high-speed camera (during video shooting)

Glass thickness: 60 mm

Water film thickness: 4 mm

Suspension: a mixture of white paint and water (32 ml of paint per 8 L of water, type of paint: Sakura Poster Color white)

High-speed camera: nac Image Technology Inc., ACS-1 M60

Setting of high-speed camera

    : shooting fps, 30000 fps

    : gain gamma, mid

    : shutter (exposure time), open

Lens: 100 mm F2.8 Ultra Macro APO lens

Setting of lens

    : lens aperture, f4

    : shooting magnification, ×3.4 (with ×2 teleconverter)

Luminous intensity: 100000 lx

Field of view: 1.5 cm × 1.2 cm

(2) Image processing is performed by obtaining binarization thresholds through the following steps. (2-1) In a step of obtaining an actual grounded part, a value having the highest frequency in a brightness distribution of a stationary image shot in the shooting is determined as a binarization threshold to separate the actual grounded part from parts other than the actual grounded part (combined region of the water film part and the void space).

(2-2) In a step of obtaining a void space, a binarization threshold obtained by discriminant analysis of the snapshot images constituting the video obtained in the shooting is determined as a binarization threshold to separate the void space from parts other than the void space (combined region of the actual grounded part and the water film part).

(3) Calculation is performed to determine an area percentage of a combined region of the actual grounded part and the water film part in a whole 100% area (area%) of a first snapshot image in which the region of the actual ground part first occupies 1.0% (area%) or more of the snapshot image among the snapshot images constituting the video.

The tires having an area percentage S (%), which is determined in the method of evaluating the water drainage performance of tires, as low as lower than 30.0% are evaluated as having high water drainage performance, in particular, high micro-level water drainage performance of the irregularities on the tire surface.

<Acetone extractable content A (% by mass)>

The amount of the substances extracted with acetone from a rubber specimen cut out of the tread of each test tire is measured by a method for measuring the acetone extractable content in accordance with JIS K 6229:2015.

(Ice grip performance)

A set of the test tires is mounted on a car. The car is driven on ice under the conditions described below to evaluate ice grip performance. The ice grip performance is evaluated by driving the car on ice, applying the brakes that lock up during driving at 30 km/h, and measuring the stopping distance (brake stopping distance on ice) required for the car to stop.

The distance is expressed as an index (ice grip performance index) relative to the distance of the reference formulation set to 100.

A higher index indicates better braking performance on ice (ice grip performance).

Air temperature -6°C to -1°C

[Table 1]

| | | Formulation | | | | | | | | | | | | | | | |
|---|---|---|---|---|---|---|---|---|---|---|---|---|---|---|---|---|---|
| | | 1-1 | 1-2 | 1-3 | 1-4 | 1-5 | 1-6 | 1-7 | 1-8 | 1-9 | 1-10 | 1-11 | 1-12 | 1-13 | 1-14 | 1-15 | 1-16 |
| Formulation (parts by mass) | NR | 40 | 40 | 40 | 40 | 40 | 40 | 40 | 40 | 40 | 40 | 40 | 40 | 40 | 40 | 40 | 40 |
| | BR | 60 | 60 | 60 | 60 | 60 | 60 | 60 | 60 | 60 | 60 | 60 | 60 | 60 | 60 | 60 | 60 |
| | Carbon black | 5 | 5 | 5 | 5 | 5 | 5 | 5 | 5 | 5 | 5 | 5 | 5 | 5 | 5 | 5 | 5 |
| | Silica | 60 | 60 | 60 | 60 | 60 | 60 | 70 | 80 | 60 | 60 | 60 | 60 | 60 | 60 | 60 | 60 |
| | Magnesium sulfate (1 μm) | 30 | 60 | 60 | 60 | 0 | 0 | 30 | 30 | 30 | 0 | 150 | 0 | 60 | 15 | 60 | 60 |
| | Magnesium sulfate (50 μm) | 0 | 0 | 0 | 0 | 30 | 0 | 0 | 0 | 0 | 0 | 0 | 0 | 0 | 0 | 0 | 0 |
| | Magnesium sulfate (100 μm) | 0 | 0 | 0 | 0 | 0 | 15 | 0 | 0 | 0 | 0 | 0 | 0 | 0 | 0 | 0 | 0 |
| | Magnesium sulfate (150 μm) | 0 | 0 | 0 | 0 | 0 | 0 | 0 | 0 | 0 | 0 | 0 | 15 | 0 | 0 | 0 | 0 |
| | Silane coupling agent | 5 | 5 | 5 | 5 | 5 | 5 | 5 | 5 | 5 | 5 | 5 | 5 | 5 | 5 | 5 | 5 |
| | Oil | 30 | 50 | 50 | 50 | 30 | 20 | 35 | 40 | 20 | 15 | 70 | 20 | 40 | 20 | 50 | 50 |
| | Resin | 5 | 5 | 5 | 5 | 5 | 5 | 5 | 5 | 5 | 5 | 5 | 5 | 5 | 5 | 5 | 5 |
| | Wax | 2 | 2 | 2 | 2 | 2 | 2 | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 | 2 | 2 | 2 | 2 | 2 | 2 |
| | Processing aid | 5 | 5 | 5 | 5 | 5 | 5 | 5 | 5 | 5 | 5 | 5 | 5 | 5 | 5 | 5 | 5 |
| | Zinc oxide | 3 | 3 | 3 | 3 | 3 | 3 | 3 | 3 | 3 | 3 | 3 | 3 | 3 | 3 | 3 | 3 |
| | Sulfur | 1 | 1 | 1 | 1 | 1 | 1 | 1 | 1 | 1 | 1 | 1 | 1 | 1 | 1 | 1 | 1 |
| | Vulcanization accelerator CZ | 2 | 2 | 2 | 2 | 2 | 2 | 2 | 2 | 2 | 2 | 2 | 2 | 2 | 2 | 2 | 2 |
| | Vulcanization accelerator DPG | 2 | 2 | 2 | 2 | 2 | 2 | 2 | 2 | 2 | 2 | 2 | 2 | 2 | 2 | 2 | 2 |
| | Liquid polymer | 0 | 0 | 0 | 0 | 0 | 0 | 0 | 0 | 5 | 0 | 0 | 0 | 0 | 0 | 0 | 0 |
| Specification/Evaluation | Thickness T (mm) of tread | 9 | 9 | 11 | 14 | 11 | 11 | 9 | 9 | 9 | 11 | 11 | 11 | 16 | 11 | 15 | 13 |
| | Land ratio L (%) | 70 | 70 | 70 | 70 | 70 | 70 | 70 | 70 | 70 | 70 | 70 | 70 | 70 | 70 | 70 | 70 |
| | Area percentage S (%) | 28 | 26 | 26 | 26 | 26 | 26 | 28 | 28 | 28 | 60 | 40 | 40 | 26 | 35 | 26 | 26 |
| | S × T | 252 | 234 | 286 | 364 | 286 | 286 | 252 | 252 | 252 | 660 | 440 | 440 | 416 | 385 | 390 | 338 |
| | L/S | 2.5 | 2.7 | 2.7 | 2.7 | 2.7 | 2.7 | 2.5 | 2.5 | 2.5 | 1.2 | 1.8 | 1.8 | 2.7 | 2.0 | 2.7 | 2.7 |
| | Acetone extractable content A | 18 | 23 | 23 | 23 | 18 | 17 | 20 | 21 | 17 | 16 | 22 | 17 | 20 | 17 | 23 | 23 |
| | Ice grip performance (index) | 102 | 122 | 117 | 112 | 120 | 120 | 104 | 107 | 107 | 82 | 87 | 87 | 97 | 100 | 106 | 114 |

[Table 2]

| | | Formulation | | | | | | | | | |
|---|---|---|---|---|---|---|---|---|---|---|---|
| | | 2-1 | 2-2 | 2-3 | 2-4 | 2-5 | 2-6 | 2-7 | 2-8 | 2-9 | 2-10 |
| Formulation (parts by mass) | NR | 40 | 40 | 40 | 40 | 40 | 40 | 40 | 40 | 40 | 40 |
| | BR | 60 | 60 | 60 | 60 | 60 | 60 | 60 | 60 | 60 | 60 |
| | Carbon black | 5 | 5 | 5 | 5 | 5 | 5 | 5 | 5 | 5 | 5 |
| | Silica | 60 | 60 | 60 | 60 | 60 | 60 | 60 | 60 | 60 | 60 |
| | Rubber powder (10 μm) | 50 | 100 | 100 | 100 | 0 | 0 | 0 | 0 | 0 | 100 |
| | Rubber powder (50 μm) | 0 | 0 | 0 | 0 | 40 | 0 | 0 | 100 | 0 | 0 |
| | Rubber powder (100 μm) | 0 | 0 | 0 | 0 | 0 | 15 | 0 | 0 | 0 | 0 |
| | Rubber powder (150 μm) | 0 | 0 | 0 | 0 | 0 | 0 | 0 | 0 | 15 | 0 |
| | Silane coupling agent | 5 | 5 | 5 | 5 | 5 | 5 | 5 | 5 | 5 | 5 |
| | Oil | 15 | 15 | 15 | 15 | 15 | 15 | 15 | 15 | 15 | 15 |
| | Resin | 5 | 5 | 5 | 5 | 5 | 5 | 5 | 5 | 5 | 5 |
| | Wax | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 |
| | Processing aid | 5 | 5 | 5 | 5 | 5 | 5 | 5 | 5 | 5 | 5 |
| | Zinc oxide | 3 | 3 | 3 | 3 | 3 | 3 | 3 | 3 | 3 | 3 |
| | Sulfur | 1 | 1 | 1 | 1 | 1 | 1 | 1 | 1 | 1 | 1 |
| | Vulcanization accelerator CZ | 2 | 2 | 2 | 2 | 2 | 2 | 2 | 2 | 2 | 2 |
| | Vulcanization accelerator DPG | 2 | 2 | 2 | 2 | 2 | 2 | 2 | 2 | 2 | 2 |
| | Liquid polymer | 0 | 0 | 0 | 0 | 0 | 0 | 0 | 0 | 0 | 0 |
| Specification/Evaluation | Thickness T (mm) of tread | 9 | 9 | 11 | 14 | 11 | 11 | 11 | 11 | 11 | 16 |
| | Land ratio L (%) | 70 | 70 | 70 | 70 | 70 | 70 | 70 | 70 | 70 | 70 |
| | Area percentage S (%) | 28 | 26 | 26 | 26 | 26 | 26 | 60 | 35 | 40 | 26 |
| | S × T | 252 | 234 | 286 | 364 | 286 | 286 | 660 | 385 | 440 | 416 |
| | L/S | 2.5 | 2.7 | 2.7 | 2.7 | 2.7 | 2.7 | 1.2 | 2.0 | 1.8 | 2.7 |
| | Acetone extractable content A | 15 | 14 | 14 | 14 | 15 | 16 | 16 | 14 | 16 | 14 |
| | Ice grip performance (index) | 105 | 126 | 121 | 116 | 124 | 124 | 84 | 89 | 89 | 100 |

[Table 3]

| | | Formulation | | | | | | | | |
|---|---|---|---|---|---|---|---|---|---|---|
| | | 3-1 | 3-2 | 3-3 | 3-4 | 3-5 | 3-6 | 3-7 | 3-8 | 3-9 |
| Formulation (parts by mass) | NR | 40 | 40 | 40 | 40 | 40 | 40 | 40 | 40 | 40 |
| | BR | 60 | 60 | 60 | 60 | 60 | 60 | 60 | 60 | 60 |
| | Carbon black | 5 | 5 | 5 | 5 | 5 | 5 | 5 | 5 | 5 |
| | Silica | 60 | 60 | 60 | 60 | 60 | 60 | 60 | 60 | 60 |
| | Eggshell powder (10 μm) | 10 | 20 | 20 | 20 | 0 | 0 | 40 | 0 | 20 |
| | Eggshell powder (50 μm) | 0 | 0 | 0 | 0 | 10 | 0 | 0 | 0 | 0 |
| | Eggshell powder (100 μm) | 0 | 0 | 0 | 0 | 0 | 0 | 0 | 10 | 0 |
| | Silane coupling agent | 5 | 5 | 5 | 5 | 5 | 5 | 5 | 5 | 5 |
| | Oil | 15 | 15 | 15 | 15 | 15 | 15 | 15 | 15 | 15 |
| | Resin | 5 | 5 | 5 | 5 | 5 | 5 | 5 | 5 | 5 |
| | Wax | 2 | 2 | 2 | 2 | 2 | 2 | 2 | 2 | 2 |
| | Antioxidant | 2 | 2 | 2 | 2 | 2 | 2 | 2 | 2 | 2 |
| | Processing aid | 5 | 5 | 5 | 5 | 5 | 5 | 5 | 5 | 5 |
| | Zinc oxide | 3 | 3 | 3 | 3 | 3 | 3 | 3 | 3 | 3 |
| | Sulfur | 1 | 1 | 1 | 1 | 1 | 1 | 1 | 1 | 1 |
| | Vulcanization accelerator CZ | 2 | 2 | 2 | 2 | 2 | 2 | 2 | 2 | 2 |
| | Vulcanization accelerator DPG | 2 | 2 | 2 | 2 | 2 | 2 | 2 | 2 | 2 |
| | Liquid polymer | 0 | 0 | 0 | 0 | 0 | 0 | 0 | 0 | 0 |
| Specification/Evaluation | Thickness T (mm) of tread | 9 | 9 | 11 | 14 | 11 | 11 | 11 | 11 | 16 |
| | Land ratio L (%) | 70 | 70 | 70 | 70 | 70 | 70 | 70 | 70 | 70 |
| | Area percentage S (%) | 28 | 26 | 26 | 26 | 26 | 60 | 40 | 40 | 26 |
| | S × T | 252 | 234 | 286 | 364 | 286 | 660 | 440 | 440 | 416 |
| | L/S | 2.5 | 2.7 | 2.7 | 2.7 | 2.7 | 1.2 | 1.8 | 1.8 | 2.7 |
| | Acetone extractable content A | 16 | 15 | 15 | 15 | 16 | 16 | 14 | 16 | 15 |
| | Ice grip performance (index) | 105 | 126 | 121 | 116 | 124 | 84 | 89 | 89 | 100 |

The present invention (1) relates to a method of evaluating the water drainage performance of tires, the method including:

shooting a video of a tire rolling on a transparent or translucent plate provided with a water film from below the transparent or translucent plate;
processing a snapshot image of the shot video into regions of an actual grounded part, a water film part, and a void space; and
calculating a ratio of the actual grounded part and the water film part.

The present invention (2) relates to the method of evaluating the water drainage performance of tires according to the present invention (1),
wherein the ratio in the calculation is an area percentage of a combined region of the actual grounded part and the water film part in a whole 100% area (area%) of the snapshot image.
The present invention (3) relates to the method of evaluating the water drainage performance of tires according to the present invention (1) or (2),
wherein the water film includes a suspension.
The present invention (4) relates to the method of evaluating the water drainage performance of tires according to any combinations of the present inventions (1) to (3),
wherein the ratio to be calculated in the calculation is an area percentage (area%) of a combined region of the actual grounded part and the water film part in a whole 100% area (area%) of a first snapshot image in which the region of the actual ground part first occupies 1.0% (area%) or more of the snapshot image.

The present invention (5) relates to the method of evaluating the water drainage performance of tires according to any combinations of the present inventions (1) to (4),

wherein, in the image processing, a binarization threshold to separate the actual grounded part from regions other than the actual grounded part is a value having a highest frequency in a brightness distribution.

The present invention (6) relates to the method of evaluating the water drainage performance of tires according to any combinations of the present inventions (1) to (5),

wherein, in the image processing, a binarization threshold to separate the void space from regions other than the void space is determined by discriminant analysis.

The present invention (7) relates to the method of evaluating the water drainage performance of tires according to any combinations of the present inventions (1) to (6),

wherein, in the image processing, all snapshot images constituting the shot video are subjected to separation into the regions of the actual grounded part, the water film part, and the void space.

The present invention (8) relates to a tire including a tread, the tire having an area percentage S (%) determined in a method of evaluating the water drainage performance of tires described below and a thickness T (mm) of the tread, the S and T satisfying the following formulas (1) and (2):

$$(1) \quad S < 30$$

$$(2) \quad S \times T \leq 400$$

(Method of evaluating the water drainage performance of tires)

A method of evaluating the water drainage performance of tires, the method including:

shooting a video of a tire rolling on a transparent or translucent plate provided with a water film from below the transparent or translucent plate;

processing a snapshot image of the shot video into regions of an actual grounded part, a water film part, and a void space; and

calculating a ratio of the actual grounded part and the water film part,

wherein the water film includes a suspension,

wherein, in the image processing, a binarization threshold to separate the actual grounded part from regions other than the actual grounded part is a value having a highest frequency in a brightness distribution; a binarization threshold to separate the void space from regions other than the void space is determined by discriminant analysis; and all snapshot images constituting the shot video are subjected to separation into the regions of the actual grounded part, the water film part, and the void space; and

wherein the ratio to be calculated in the calculation is an area percentage (area%) of a combined region of the actual grounded part and the water film part in a whole 100% area (area%) of a first snapshot image in which the region of the actual ground part first occupies 1.0% (area%) or more of the snapshot image.

The present invention (9) relates to the tire according to the present invention (8), satisfying the following formula:

$$S \times T \leq 380.$$

The present invention (10) relates to the tire according to the present invention (8) or (9), satisfying the following formula:

$$S \times T \leq 360.$$

The present invention (11) relates to the tire according to any combinations of the present inventions (8) to (10), wherein a land ratio L (%) and the area percentage S (%) satisfy the following formula:

$$L/S \geq 2.0.$$

The present invention (12) relates to the tire according to any combinations of the present inventions (8) to (11), wherein an acetone extractable content A (% by mass) satisfies the following formula:

$$A \geq 17.0.$$

The present invention (13) relates to the tire according to any combinations of the present inventions (8) to (12), wherein the tread contains an inorganic filler in an amount of 60 parts by mass or more per 100 parts by mass of a rubber component content.

The present invention (14) relates to the tire according to any combinations of the present inventions (8) to (13), wherein the tread contains a silica in an amount of 60 parts by mass or more per 100 parts by mass of a rubber component content.

The present invention (15) relates to the tire according to any combinations of the present inventions (8) to (14), wherein the tread contains a water-soluble filler.

The present invention (16) relates to the tire according to any combinations of the present inventions (8) to (15), wherein the tread contains a rubber powder.

The present invention (17) relates to the tire according to any combinations of the present inventions (8) to (16), wherein the tread contains a liquid polymer.

The present invention (18) relates to the tire according to any combinations of the present inventions (8) to (17), which is a winter tire.

Desirable embodiments are as follows.

The present invention (A): a method of evaluating the water drainage performance of tires, the method including:

shooting a video of a tire rolling on a transparent or translucent plate provided with a water film from below the transparent or translucent plate;
processing a snapshot image of the shot video into regions of an actual grounded part, a water film part, and a void space; and
calculating a ratio of the actual grounded part and the water film part.

The present invention (B): the method of evaluating the water drainage performance of tires according to the present invention (A),
wherein the ratio in the calculation is an area percentage of a combined region of the actual grounded part and the water film part in a whole 100% area (area%) of the snapshot image.

The present invention (C): the method of evaluating the water drainage performance of tires according to the present invention (A) or (B),
wherein the ratio to be calculated in the calculation is an area percentage (area%) of a combined region of the actual grounded part and the water film part in a whole 100% area (area%) of a first snapshot image in which the region of the actual ground part first occupies 1.0% (area%) or more of the snapshot image.

The present invention (D): the method of evaluating the water drainage performance of tires according to any combinations of the present inventions (A) to (C),
wherein, in the image processing, a binarization threshold to separate the actual grounded part from regions other than the actual grounded part is a value having a highest frequency in a brightness distribution.

The present invention (E): the method of evaluating the water drainage performance of tires according to any combinations of the present inventions (A) to (D),
wherein, in the image processing, a binarization threshold to separate the void space from regions other than the void space is determined by discriminant analysis.

The present invention (F): the method of evaluating the water drainage performance of tires according to any combinations of the present inventions (A) to (E)
wherein, in the image processing, all snapshot images constituting the shot video are subjected to separation into the regions of the actual grounded part, the water film part, and the void space.

The present invention (G): A tire including a tread, the tire having an area percentage S (%) determined in a method of evaluating the water drainage performance of tires described below and a thickness T (mm) of the tread, the S and T satisfying the following formulas (1) and (2):

$$(1) \quad S < 30$$

$$(2) \quad S \times T \leq 400,$$

preferably $S \times T \leq 380$, particularly preferably $S \times T \leq 360$,

(Method of evaluating the water drainage performance of tires)

A method of evaluating the water drainage performance of tires, the method including:

shooting a video of a tire rolling on a transparent or translucent plate provided with a water film from below the transparent or translucent plate;
processing a snapshot image of the shot video into regions of an actual grounded part, a water film part, and a void space; and
calculating a ratio of the actual grounded part and the water film part,
wherein the water film includes a suspension,
wherein, in the image processing, a binarization threshold to separate the actual grounded part from regions other than the actual grounded part is a value having a highest frequency in a brightness distribution; a binarization threshold to separate the void space from regions other than the void space is determined by discriminant analysis; and all snapshot images constituting the shot video are subjected to separation into the regions of the actual grounded part, the water film part, and the void space; and
wherein the ratio to be calculated in the calculation is an area percentage (area%) of a combined region of the actual grounded part and the water film part in a whole 100% area (area%) of a first snapshot image in which the region of the actual ground part first occupies 1.0% (area%) or more of the snapshot image.

The present invention (H): the tire according to the present invention (G),
wherein a land ratio L (%) and the area percentage S (%) satisfy the following formula:

$$L/S \geq 2.0.$$

The present invention (I): the tire according to the present invention (G) or (H),
wherein an acetone extractable content A (% by mass) satisfies the following formula:

$$A \geq 17.0.$$

The present invention (J): the tire according to any combinations of the present inventions (G) to (I),
wherein the tread contains an inorganic filler in an amount of 60 parts by mass or more per 100 parts by mass of a rubber component content.
The present invention (K): the tire according to any combinations of the present inventions (G) to (J),
wherein the tread contains a silica in an amount of 60 parts by mass or more per 100 parts by mass of a rubber component content.
The present invention (L): the tire according to any combinations of the present inventions (G) to (K),
wherein the tread contains a water-soluble filler.
The present invention (M): the tire according to any combinations of the present inventions (G) to (L),
wherein the tread contains a rubber powder.
The present invention (N): the tire according to any combinations of the present inventions (G) to (M),
wherein the tread contains a liquid polymer.
The present invention (O): the tire according to any combinations of the present inventions (G) to (N), which is a winter tire.

REFERENCE SIGNS LIST

101 tire grounded state-shooting system
102 transparent or translucent plate
103 water film

104 image-shooting device
111 tire
112 grounded part
2 tire
4 tread
6 sidewall
8 wing
10 clinch
12 bead
14 carcass
16 belt layer
18 band
20 innerliner
22 chafer
24 tread surface
26 groove
28 base layer
30 cap layer
32 core
34 apex
36 carcass ply
36a main portion
36b folded portion
38 interior layer
40 exterior layer
42 main groove
44 rib
CL equator of tire 2
T1 thickness of tread at a predetermined point on tread surface 24

**Claims**

1. A method of evaluating the water drainage performance of tires, the method comprising:

   shooting a video of a tire rolling on a transparent or translucent plate provided with a water film from below the transparent or translucent plate;
   processing a snapshot image of the shot video into regions of an actual grounded part, a water film part, and a void space; and
   calculating a ratio of the actual grounded part and the water film part.

2. The method of evaluating the water drainage performance of tires according to claim 1,
   wherein the ratio in the calculation is an area percentage of a combined region of the actual grounded part and the water film part in a whole 100% area (area%) of the snapshot image.

3. The method of evaluating the water drainage performance of tires according to claim 1 or 2,
   wherein the ratio to be calculated in the calculation is an area percentage (area%) of a combined region of the actual grounded part and the water film part in a whole 100% area (area%) of a first snapshot image in which the region of the actual ground part first occupies 1.0% (area%) or more of the snapshot image.

4. The method of evaluating the water drainage performance of tires according to any one of claims 1 to 3,
   wherein, in the image processing, a binarization threshold to separate the actual grounded part from regions other than the actual grounded part is a value having a highest frequency in a brightness distribution.

5. The method of evaluating the water drainage performance of tires according to any one of claims 1 to 4,
   wherein, in the image processing, a binarization threshold to separate the void space from regions other than the void space is determined by discriminant analysis.

6. The method of evaluating the water drainage performance of tires according to any one of claims 1 to 5, wherein, in the image processing, all snapshot images constituting the shot video are subjected to separation into the regions of the actual grounded part, the water film part, and the void space.

7. A tire comprising a tread,

the tire having an area percentage S (%) determined in a method of evaluating the water drainage performance of tires described below and a thickness T (mm) of the tread, the S and T satisfying the following formulas (1) and (2):

$$(1) \quad S < 30$$

$$(2) \quad S \times T \leq 400,$$

preferably S × T ≤ 380, particularly preferably S × T ≤ 360,
(Method of evaluating the water drainage performance of tires)
A method of evaluating the water drainage performance of tires, the method comprising:

shooting a video of a tire rolling on a transparent or translucent plate provided with a water film from below the transparent or translucent plate;
processing a snapshot image of the shot video into regions of an actual grounded part, a water film part, and a void space; and
calculating a ratio of the actual grounded part and the water film part,
wherein the water film includes a suspension,
wherein, in the image processing, a binarization threshold to separate the actual grounded part from regions other than the actual grounded part is a value having a highest frequency in a brightness distribution; a binarization threshold to separate the void space from regions other than the void space is determined by discriminant analysis; and all snapshot images constituting the shot video are subjected to separation into the regions of the actual grounded part, the water film part, and the void space; and
wherein the ratio to be calculated in the calculation is an area percentage (area%) of a combined region of the actual grounded part and the water film part in a whole 100% area (area%) of a first snapshot image in which the region of the actual ground part first occupies 1.0% (area%) or more of the snapshot image.

8. The tire according to claim 7,
wherein a land ratio L (%) and the area percentage S (%) satisfy the following formula:

$$L/S \geq 2.0.$$

9. The tire according to claim 7 or 8,
wherein an acetone extractable content A (% by mass) satisfies the following formula:

$$A \geq 17.0.$$

10. The tire according to any one of claims 7 to 9,
wherein the tread contains an inorganic filler in an amount of 60 parts by mass or more per 100 parts by mass of a rubber component content.

11. The tire according to any one of claims 7 to 10,
wherein the tread contains a silica in an amount of 60 parts by mass or more per 100 parts by mass of a rubber component content.

12. The tire according to any one of claims 7 to 11,
wherein the tread contains a water-soluble filler.

**13.** The tire according to any one of claims 7 to 12,
wherein the tread contains a rubber powder.

**14.** The tire according to any one of claims 7 to 13,
wherein the tread contains a liquid polymer.

**15.** The tire according to any one of claims 7 to 14, which is a winter tire.

FIG. 1

Standing still or rolling

FIG. 2A

Extraction of brightness distribution

* Threshold is determined for each tire.

FIG. 2B

Black ◄─────────────────────────► White

FIG. 3A

FIG. 3B

FIG. 3C

FIG. 4A

Tire with fast water drainage

FIG. 4B

Tire with slow water drainage

FIG. 5

FIG. 6

Europäisches
Patentamt

European
Patent Office

Office européen
des brevets

# EUROPEAN SEARCH REPORT

Application Number

EP 23 20 0298

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 037334 A (SUMITOMO RUBBER IND) 23 February 2012 (2012-02-23) | 1-9 | INV. G01M17/02 |
| Y | * abstract * * paragraphs [0016] – [0018] * * figure 1 * | 10-15 | |
| A | JP 4 028253 B2 (BRIDGESTONE CORP) 26 December 2007 (2007-12-26) * paragraphs [0011], [0012] * | 1 | |
| Y | JP 2019 123760 A (SUMITOMO RUBBER IND) 25 July 2019 (2019-07-25) * paragraphs [00050095], [0101], [0108], [0119], [0120] * | 10,11, 13-15 | |
| Y | EP 2 716 700 B1 (SUMITOMO RUBBER IND [JP]) 30 March 2016 (2016-03-30) * paragraph [0084] * | 12 | |

TECHNICAL FIELDS
SEARCHED      (IPC)

G01M

The present search report has been drawn up for all claims

| Place of search | Date of completion of the search | Examiner |
|---|---|---|
| The Hague | 5 March 2024 | Grewe, Clemens F. |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
 
& : member of the same patent family, corresponding
     document

EPO FORM 1503 03.82 (P04C01)

Europäisches
Patentamt

European
Patent Office

Office européen
des brevets

**Application Number**

**EP 23 20 0298**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

# LACK OF UNITY OF INVENTION
## SHEET B

The Search Division considers that the present European patent application does not comply with the requirements of unity of invention and relates to several inventions or groups of inventions, namely:

```
    1. claims: 1-7

        - Invention 1 according to claims 1-7 solves the problem of
        how to provide a method which simplifies the tire water
        drainage determination.
                         ---


    2. claims: 8-15

        - Invention 2 according to claims 8-15 solves the problem of
        how to provide a specific chemical composition of the tire.
                         ---
```

## ANNEX TO THE EUROPEAN SEARCH REPORT
## ON EUROPEAN PATENT APPLICATION NO.

EP 23 20 0298

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2024

| Patent document cited in search report | | Publication date | Patent family member(s) | | Publication date |
|---|---|---|---|---|---|
| JP 2012037334 | A | 23-02-2012 | JP | 5469563 B2 | 16-04-2014 |
| | | | JP | 2012037334 A | 23-02-2012 |
| JP 4028253 | B2 | 26-12-2007 | JP | 4028253 B2 | 26-12-2007 |
| | | | JP | 2003240681 A | 27-08-2003 |
| JP 2019123760 | A | 25-07-2019 | CN | 110028711 A | 19-07-2019 |
| | | | EP | 3511179 A1 | 17-07-2019 |
| | | | JP | 7151083 B2 | 12-10-2022 |
| | | | JP | 2019123760 A | 25-07-2019 |
| EP 2716700 | B1 | 30-03-2016 | CN | 103597025 A | 19-02-2014 |
| | | | EP | 2716700 A1 | 09-04-2014 |
| | | | JP | 5097862 B1 | 12-12-2012 |
| | | | JP | 2013007025 A | 10-01-2013 |
| | | | WO | 2012160938 A1 | 29-11-2012 |

EPO FORM P0459

For more details about this annex : see Official Journal of the European Patent Office, No. 12/82

## REFERENCES CITED IN THE DESCRIPTION

**Patent documents cited in the description**

- JP H7128196 A

**Non-patent literature cited in the description**

- **NOBUYUKI OTSU.** Automatic Threshold Selection Method Based on Discriminant and Least Squares Criteria. *The Transactions of the Institute of Electronics, Information and Communication Engineers D,* 1980, vol. J63-D (4), 346-356